(19) Europäisches Patentamt
European Patent Office
Office européen des brevets

(11) **EP 2 987 415 B1**

(12) **EUROPEAN PATENT SPECIFICATION**

(45) Date of publication and mention
of the grant of the patent:
**09.10.2019 Bulletin 2019/41**

(51) Int Cl.:
***A23L 29/231*** (2016.01)    ***A23L 27/60*** (2016.01)
***A23L 23/10*** (2016.01)    ***A23L 23/00*** (2016.01)

(21) Application number: **15186076.4**

(22) Date of filing: **17.06.2013**

(54) **CONCENTRATE FOOD COMPOSITION COMPRISING A PECTIN GEL**

KONZENTRAT-LEBENSMITTELZUSAMMENSETZUNG

COMPOSITION ALIMENTAIRE CONCENTRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2012 EP 12174650**

(43) Date of publication of application:
**24.02.2016 Bulletin 2016/08**

(62) Document number(s) of the earlier application(s) in accordance with Art. 76 EPC:
**13732396.0 / 2 866 591**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC, a company registered in England and**
**Wales under company no. 41424 of London EC4Y 0DY (GB)**
Designated Contracting States:
**CY GB IE MT**

(72) Inventors:
• **SILVA PAES, Sabrina**
**3133 AT Vlaardingen (NL)**
• **SCHUMM, Stephan, Georg**
**3133 AT Vlaardingen (NL)**

(74) Representative: **Tjon, Hon Kong Guno**
**Unilever N.V.**
**Unilever Patent Group**
**Olivier van Noortlaan 120**
**3133 AT  Vlaardingen (NL)**

(56) References cited:
**EP-A1- 2 227 966    EP-A1- 2 468 110**
**EP-A2- 0 757 895    WO-A1-97/10726**
**DE-A1- 2 649 406    JP-A- 2005 087 090**

• **SANG-HO YOO ET AL: "Monovalent Salt-Induced Gelation of Enzymatically Deesterified Pectin", JOURNAL OF AGRICULTURAL AND FOOD CHEMISTRY, vol. 51, no. 25, 1 December 2003 (2003-12-01), pages 7410-7417, XP055038900, ISSN: 0021-8561, DOI: 10.1021/jf030152o**

**EP 2 987 415 B1**

**Description**

The present invention relates to a concentrate food composition. It further relates to a process to prepare the same. It further relates to the use said food composition for preparing a bouillon, soup, sauce, gravy or seasoned dish.

**Background of the invention**

High-salt concentrate food compositions which after dilution in water or a dish result in a bouillon, a soup, a sauce or a gravy or a seasoned dish have been described. This class of products is known to the consumer as well as to the skilled person for many decades. They are known for example in the form of dry bouillon cubes or soup cubes or seasoning cubes. Concentrated products can be dry (e.g. dehydrated), liquid, semi-liquid or paste-like products which, after the addition to water according to the directions for use, yield ready to eat preparations.

Recently, savoury concentrate food compositions became available which are in the form of a semi-solid gel. Compared to traditional dry concentrates like bouillon cubes, these gelled concentrates can contain more water and are considered to have a more fresh appearance, while still having the required high-salt level, e.g. to allow high dilution ratios while maintaining a desired taste impact. Compared to liquid concentrates, the gelled concentrates show the advantage that they are semi-solid, and sufficiently firm (also referred to in the art as self-sustaining, shape stable, soft-solid or semi-solid), and non-sticky and therefore can be unit dosed, like a traditional bouillon cube.

Gelled savoury concentrates rely for their firm, semi-solid, gelled texture on the presence of a gelling agent. A gelling agent can comprise one or more gelling and/or thickening agents which together provide the firm semi-solid gel texture. For the application in high-salt food concentrates, the gelling agent should be compatible with high-salt levels. Most gelling agents that can form a semi-solid gel in food products which are ready to eat (low-salt levels), appeared not compatible with very high-salt levels, such as common in savoury food concentrates. At these high-salt levels many gelling agents appeared to behave very different than they do at low-salt levels. In a high-salt environment they might lose their texturing ability, or often do not form a gel at all, or show other significant disadvantages which make production of savoury high-salt gels at industrial scale far from attractive, if not impossible.

WO2007/068484 describes a gelled savoury concentrate comprising a gelling agent which contains a mixture of xanthan gum and locust bean gum. EP2468110 describes a food composition comprising low-methoxy pectin. Despite the development of gelled concentrate food compositions which could be produced with the required high-salt level, it was experienced that these savoury food concentrates show several disadvantages.

A disadvantage that was observed with many, if not all, of the gelled concentrate food compositions as currently available, is the phenomenon that when the concentrate composition is diluted, for example to make a bouillon, a soup or a seasoned dish, this diluted composition shows an undesired considerable increase in viscosity (or even gels) when it stands for a while and gradually cools down to temperatures such as 50 or 40 °C, or lower. In a seasoned dish that has cooled down an undesired stickiness or lumping in the dish may be observed. This clearly can give a non-desired appearance that is sometimes interpreted as "artificial" by a consumer, as it does not sufficiently reflect the behaviour of a homemade bouillon, soup or meal etc.

Concentrate food compositions may need relatively high levels of texturing agent, compared to low-salt, ready-to-eat food compositions. For the production price of the concentrate food product this is not attractive. It is desired that the amount of gelling agent can be reduced without compromising on the gel strength.

A concentrate food composition is used to prepare for example a soup or to season a dish. Therefore, such a product needs dispersion and/or dissolving through the dish or in a pan of water. A short preparation time of the meal is appreciated by the consumer and it is therefore desired to provide a concentrate food composition wherein the dissolution and/or dispersion time is fast, for example 25 grams of the composition dissolves in 500 ml or disperses in 1L of hot water within 3 minutes.

**Summary of the invention**

The aim of the present invention is to provide a concentrate food composition for example to provide a bouillon, soup, sauce, gravy or to season a meal, which concentrate food composition is in the form of a semi-solid gel at room temperature and which is shape-stable at high-salt levels, in this way allowing the conventional dilution ratios as used for concentrate food compositions like bouillon cubes, soup cubes, or seasoning products, (e.g. 5 to 50 times by weight). It is a further aim of the present invention to provide such a concentrate food composition wherein the amount of gelling agent can be reduced without compromising on the gel strength.

It is a further aim of the invention to provide these concentrate food compositions wherein the increase in viscosity upon cooling of the diluted concentrate food composition is very low, preferably is negligible. Further it is desired that the spoonability of the concentrate food composition is relatively easy and natural. It is a further aim of the present invention to provide such a concentrate food composition wherein the dissolution and/or dispersion time is relatively fast.

A further aim of the present invention was to provide a process to produce a food composition which is stable at high-salt levels and which is in the form of a semi-solid gel at room temperature.

Surprisingly, this aim was met by a concentrate food composition in the form of a gel, comprising

- Water,
- Sodium salt (Na salt) and Potassium salt (K salt), preferably in a total amount of from 5 wt% to 40 wt%, based on the total water content, wherein the amount of Na salt and K salt is to be calculated as ((weight of Na salt + weight of K salt)/(weight of Na salt + weight of K salt + weight of total water content))*100 in %,
- Gelling pectin, being all pectin with a DE below 55%, and wherein gelling pectin is dissolved in the water,
- Calcium salt,

wherein the ratio of ($Na^+$ cations/ ($Na^+$ cations + $K^+$ cations))*100 (in %) is from 15 wt% to 95 wt%.

In a further aspect, the invention relates to a process to provide a concentrate food composition in the form of a gel according to the invention, the process comprising the steps of:

a. Providing a mixture comprising:

- Water,
- Gelling pectin, being all pectin with a DE below 55%, wherein gelling pectin is dissolvable in water,

b. Heating the mixture resulting from step a) to result in a solution,
c. Adding sodium salt (Na salt) and potassium salt (K salt), preferably in a total amount of from 5 wt% to 40 wt% (based on the weight of the total water content of the resulting food composition, wherein the weight of Na salt and K salt is to be calculated as ((weight of Na salt + K salt)/(weight of Na salt + K salt + weight of total water content of the resulting food composition)) *100 in %,
d. Adding calcium salt,
e. Packaging,
f. Allowing the mixture to solidify,

to result in a concentrate food composition in the form of a gel.

In a further aspect, the present invention relates to the use of the concentrate food composition according to the invention to prepare a bouillon, a soup, sauce, a gravy or a seasoned dish.

**Detailed description of the invention**

Food composition

The food composition of the present invention is in the form of a semi-solid gel. Preferably, the gel is a self-sustaining gel. It is not a paste. A semi-solid gel is known to the person skilled in the art of gelled bouillon concentrates. This is referred to in the field as unit dosing, an advantage shared with traditional, dry bouillon cubes. A semi-solid gel texture allows the consumer of the food composition to remove the food composition from its packaging easily and in one piece. A semi-solid gel may allow making easy scoops for example with a spoon, which may be preferred for multi-dosage packagings. The semi-solid, preferably self-sustaining, gel texture is present at least at room temperature (20°C). The semi-solid gel texture prevents that the food composition flows apart, like a liquid or a paste, after or during removal from its packaging and allows it to maintain the shape, which at least to a certain extent reflects the shape the product had when present in its packaging, in this way allowing the desired unit-dosing. The gel texture is preferably not sticky such as a paste (for example tomato paste). The gel is preferably not very elastic, to allow easy scooping with for example a spoon. In the context of the present invention at least one of the challenges was to obtain the desired gel texture in a high-salt environment.

The food composition of the invention preferably shows a rheology wherein the elastic modulus (G') is higher than the viscous modulus (G"). The ratio elastic modulus (G') to viscous modulus (G") is preferably higher than 1, more preferably higher than 3, most preferably higher than 5 Pa. The elastic modulus (G') is preferably higher than 5 Pa, more preferably higher than 10 Pa, even more preferably higher than 20 Pa, most preferably higher than 30 Pa. The elastic modulus (G') is preferably lower than 9000 Pa, more preferably lower than 5000 Pa, even more preferably lower than 3000 Pa, even more preferably lower than 2000 Pa, most preferably lower than 1000 Pa. In combination with these G' values, the viscous modulus (G") is preferably higher than 1 Pa, more preferably higher than 3 Pa, even more preferably higher than 5 Pa, most preferably higher than 10 Pa. The viscous modulus (G") is preferably lower than 1000 Pa, more preferably lower than 500 Pa, even more preferably lower than 300 Pa, even more preferably lower than 200 Pa, most preferably lower than 100 Pa • Elastic and viscous moduli are terms known in the art of rheology. They have been described for example in "Das Rheologie Handbuch, Thomas Mezger, Curt R. Vincentz-Verlag, Hannover, 2000".

The protocol for measuring the elastic and viscous modulus is as following:

- A state of the art rheometer such as the AR G2 (TA Instruments, New Castle, Delaware, USA) or Physica MCR 300 (Anton Paar GmbH, Graz, Austria) are suitable for this measurement;

- Parallel plates geometry, preferred plates with sandblasted surface

- Profile: Temperature sweep followed by time sweep test:

> a. Load the sample at 90-95 °C
> b. Cool from loading temperature to 20 °C at a rate of 5°C/min while measuring the Elastic modulus (G') and Viscous Modulus (G") at a strain of within the linear viscoselastic region (e.g. 0.5% strain, pre-determined by a strain sweep test) and a frequency of 1 Hz
> c. Keep at 20°C for 10 minutes while measuring G' and G" at the same strain and frequency conditions as during the cooling step b) (time sweep step);

- Elastic modulus (G') and Viscous Modulus (G") should be taken as the plateau values after 10 min at 20 °C (step d). If plateau values for G' and G" are not reached, allow more time for step c (for example, 20 min)

The gel texture can also, for example, be analysed by a texture analyser, as known in the art. The texture can be characterised for example using common techniques such as texture analysis of penetration or compression, as measured in with equipments such as a Texture Analyser (e.g. from Stable Microsystems™) or a Universal testing machine (e.g. from Instron™).

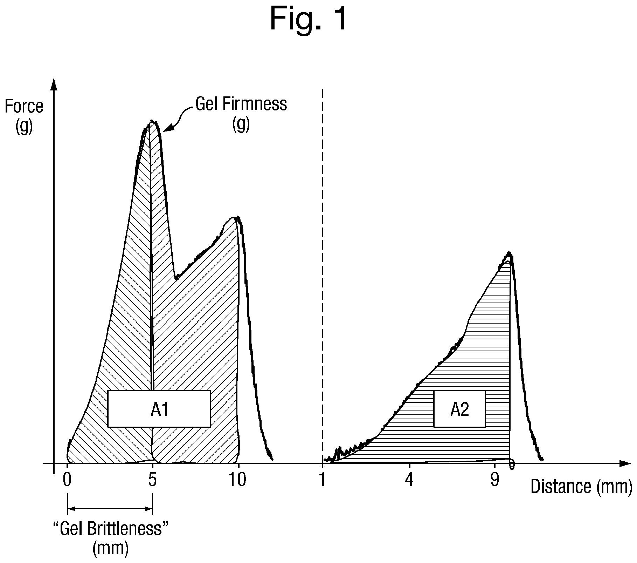

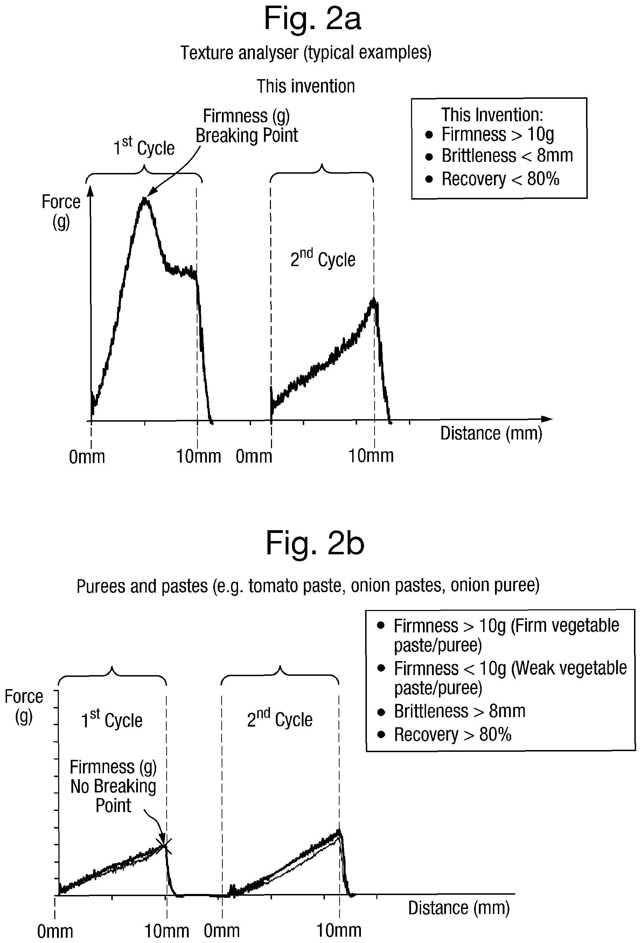

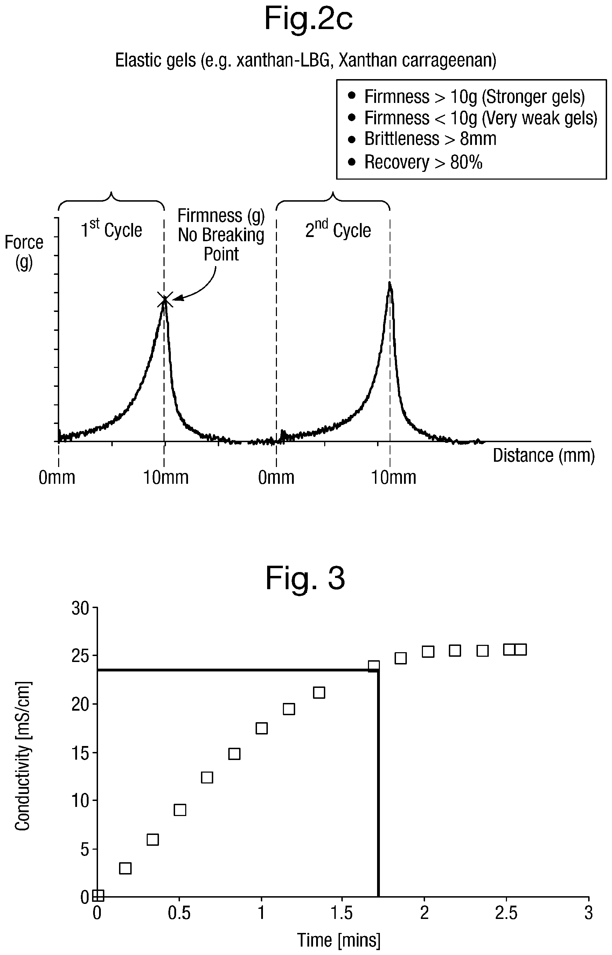

In a "penetration test", a plunger is forced into a composition and the force required for penetration of the composition is plotted against the distance (or time) of penetration into the composition at a pre-determined speed to a pre-determined depth of penetration. The plunger is then withdrawn. In the test used in the context of this invention a penetration test with two consecutive penetrations was used. If a composition is in the form of a (brittle) semi-solid gel (as preferred in this invention) it typically shows a breaking point (or irreversible deformation, e.g. yield) in the first penetration, and the maximum force is reached, indicating the "product firmness". If a composition is in the form of a paste or a very elastic gel, the product firmness (maximum force) is commonly observed at the maximum distance (depth) of penetration. The area under the force *versus* distance curve of the first penetration defines the area in the graph A1 of Figure 1. Then the plunger is forced into the composition for a second time, and again the force is plotted against the distance (or time). This part of the graph defines area A2. A typical force *versus* distance curve resulting from this penetration test on a semi-solid gel according to the invention has been indicated in Figure 2a and compared to test curves representing purees or pastes (e.g. vegetable purees and pastes) (Figure 2b) and elastic gels which are known in the prior art (e.g. xanthan-locust bean gum gel compositions) (Figure 2c).

For this invention, the following set up is used to characterise the gel texture:

Test type: Penetration test with 2 cycles:

> a. The_measurements are performed after at least 12h maturation time after the samples are prepared and gelled (solidified). A longer maturation time of for example 24h to 48h is preferred.
> b. The samples are equilibrated to room temperature for at least 2h, prior to measurement.
> c. The machine and sample container specifications are as follows:

> - Container (125 ml propylene cup), 52 milimeters diameter
> - Sample height: at least 25 millimeters
> - Equipment: Texture Analyser Stable Microsystems (or similar)
> - Probe: 1/2 inch cylinder, smooth edges (P/0.5 - 0.5 inch diameter cylinder probe, Delrin)

> > - Test set up (adapted from application notes REF: GL3/P05R, stable micro systems, Revised: March 2006). The following settings are used:

> > > • Load cell: 30kg

- Compression mode, 2 cycles
- Pre-test speed =10 millimeters/second
- Test speed =5 millimeters/second
- Post-test speed=10 millimeters/second
- Trigger force = 3g
- Penetration depth=10 millimeters (measurement error can be typically of 0.1-0.2 mm).

d. Values of parameters below are presented as average and with a standard deviation of at least duplicates.

The following relevant parameters are used to characterise the gels according to this invention and are measured using a penetration test with 2 cycles with a texture analyser according to the method as described above:

Firmness: The composition of the invention is not liquid, but has a semi-solid texture with certain firmness. The firmness is determined as the maximum force in the penetration first cycle (expressed in g). For a semi-solid gel as in this invention, the maximum force (firmness) is typically observed as a breaking point before complete penetration depth (distance is less than the penetration dept, which is 10mm). In the composition of the present invention, the firmness (in g) is preferably higher 10 g, more preferably higher than 15 g, even more preferably higher than 20 g, most preferably higher than 30 g. The firmness is preferably less than 1000 g, more preferably less than 700 g, even more preferably less than 500 g.

Brittleness: Gels of the invention are preferably brittle gels. It is preferred that the gels have a certain brittleness so they are easier to spoon and easy to disperse in the application. Brittleness is defined, for the purpose of this invention, as the distance of penetration until the maximum force is achieved (in millimeters) in the first penetration. For a semi-solid gel as in the present invention (i.e. brittle gels), that is typically observed at a breaking point, at a distance (in millimeters) less than the penetration depth defined (10 mm). This is illustrated in Figure 2a. Contrary to a semi-solid gel, a paste may be too sticky and is not brittle, it does not break. This is illustrated in Figure 2b. An elastic gel might also not break within the penetration depth imposed in the test (10mm). This is illustrated in Figure 2c. The gel of the invention is preferably not an elastic gel.

In the composition of the present invention the brittleness is preferably less than 9 millimeters, more preferably less than 8 millimeters, even more preferably less than 7 millimeters.

Recovery: The recovery of the composition is expressed as the ratio A2/A1: The ratio between A2/A1 is considered as a measure for the cohesiveness of the composition, i.e. is a measure of how well the product withstands a second deformation relative to how it behaved under the first deformation. The recovery is preferably less than 80%, more preferably less than 70%, even more preferably less than 60%.In general, semi-solid (brittle) gels as in this invention show a lower recovery value than very elastic gels, liquids, purees and pastes, as they break in the first cycle (i.e. breaking point is observed in the first cycle at a distance below 10 mm).

Water

The food composition according to the invention comprises water. Water is preferably present in a total amount of from 35 to 90 wt%. More preferably water is present in an amount of from 40 to 85 wt%, more preferably of from 45 wt% to 80 wt%, most preferably from 50 to 75wt%. Water is representing here the total water content of the food composition.

The water activity of the product is preferably of between 0.60 and 0.95, more preferably of between 0.65 and 0.90 even more preferably between 0.70 and 0.90, most preferably between 0.75 and 0.85.

Salt

The food composition according to the invention comprises sodium salt (Na salt) and potassium salt (K salt), preferably of from 5 wt% to 40 wt% of sodium salt (Na salt) and potassium salt (K salt) taken together, more preferably of from 7 wt% to 35 wt%, even more preferably of from 10 wt% to 35 wt%, even more preferably of from 15 wt% to 30 wt%, most preferably of from 20 wt% to 26 wt%, based on the total water content of the concentrate food composition. For unknown reasons, it was observed that the effects of the invention were most significant in high-salt compositions, compared to low-salt compositions like for example ready-to-eat compositions. The amount of Na salt and K salt taken together is calculated as standard in the art, and is according to the following formula:

$$((\text{weight of Na salt} + \text{weight of K salt}) / (\text{weight of Na salt} + \text{weight of K salt} + \text{weight of total water content})) *100 \text{ in } \%.$$

For example 5 g Na salt + K salt in 20 g total water content result in an amount of salt of 20 wt% on total water content. When preparing the food composition of the invention, these amounts of salts can be added during preparation. The same formula is used, mutatis mutandis, for calculating other ingredients the amount of which is described as based on the total water content, such as for example $Na^+$ cations, $K^+$ cations, $Ca^{2+}$ cations, and gelling pectin.

According to the invention, the composition comprises both $Na^+$ and $K^+$ cations. The presence of both $Na^+$ and $K^+$, at specific ratios, in the concentrate food compositions of the present invention surprising results in highly favourable synergistic effects. Counter intuitively, when both types of cations are present in the composition at high-salt levels, the concentrate food composition shows a much firmer gel structure. This allows for the use of less gelling agent, while maintaining the firmness. The gel strength is much stronger compared to the situation when only $Na^+$ cations or $K^+$ cations is present at a similar total salt content based on the total water content. This is even the more surprising, since general knowledge suggests a reduction in gel strength at extreme salt levels (higher than 5 %wt based on the total water content), for both $Na^+$ and $K^+$ cations.

The ratio of $Na^+$ cations to the total amount of $Na^+$ cations and $K^+$ cations taken together, i.e. the ratio $[Na^+\text{cations}/(Na^+ \text{cations} + K^+ \text{cations})]$, or for simplicity, $(Na^+/ (Na^++K^+)) *100$ (expressed in %) in the concentrate food composition according the invention is preferably of from 15 % to 95 %, more preferably from 35 % to 93 %, more preferably of from 40 % to 92%, even more preferably of from 45 % to 90%, most preferably from 50 % to 85 %. These ratios resulted in most significant effects on gel formation and advantages indicated above.

The food composition comprises Na salt. Most preferably, the Na salt comprises NaCl. NaCl is preferably present in an amount of from 4 wt% to 35 wt%, more preferably of from 4.5 wt% to 30 wt%, even more preferably of from 5 wt% to 25 wt%, most preferably of from 7 wt% to 23 wt%, based on the total water content of the composition.

The food composition comprises $Na^+$ cations. $Na^+$ cations are preferably present in an amount of from 1.5 wt% to 15 wt%, more preferably in an amount of from 1.7 wt% to 12 wt%, even more preferably in an amount of from 2 wt% to 11 wt%, most preferably from 2.5 wt% to 10 wt% based on the total water content of the food composition.

The food composition comprises K salt. Most preferably, the K salt comprises KCl. KCl is preferably present in an amount of from 0.6 to 20 wt%, more preferably of from 0.8 wt% to 19 wt%, even more preferably of from 1 wt% to 17 wt%, most preferably of from 1.5 wt% to 15 wt%, based on the total water content of the composition.

The composition comprises $K^+$ cations. $K^+$ cations are preferably present in an amount of from 0.3 wt% to 13 wt%, more preferably in an amount of from 0.4 wt% to 10 wt%, even more preferably in an amount of from 0.5 wt% to 9 wt%, most preferably from 0.8 wt% to 8 wt% based on the total water content of the food composition.

Consequently, it is preferred that the food composition according to the invention has an amount of $Na^+$ cations and $K^+$ cations taken together of between 2.5 wt% and 15 wt% based on the total water content, wherein the total amount of $Na^+$ cations and $K^+$ cations taken together is to be calculated as ((total weight of $Na^+$ cations and $K^+$ cations taken together) / (total weight of $Na^+$ cations and $K^+$ cations taken together + weight of total water content)) *100 in %.

The food composition of the present invention further comprises calcium cations ($Ca^{2+}$). Preferably the food composition according to the invention comprises $Ca^{2+}$ in an amount of from 0.01 wt% to 3 wt% $Ca^{2+}$, more preferably from 0.02 wt% to 2 wt% $Ca^{2+}$, even more preferably from 0.03 wt% to 1.5 wt% $Ca^{2+}$, most preferably from 0.04 wt% to 1 wt% $Ca^{2+}$ based on the total water content of the concentrate. The calcium salt is preferably present in an amount to provide these preferred amounts of $Ca^{2+}$ cations in the concentrate of the invention.

Preferably the food composition according to the invention comprises $Ca^{2+}$ in an amount of from 10 to 2000 mg $Ca^{2+}$/g of gelling pectin, more preferably from 15 to 1000 mg $Ca^{2+}$/g of gelling pectin, even more preferably from 20 to 800 mg $Ca^{2+}$/g of gelling pectin, most preferably from between 30 to 400 mg $Ca^{2+}$/g of gelling pectin (as defined below) and dissolved in the water of the food composition. It might be preferred that the food composition comprises $Ca^{2+}$ in an amount of from 100-300 mg $Ca^{2+}$/g of gelling pectin (as defined below) and dissolved in the water of the food composition.

The present invention surprisingly allowed the use of lower $Ca^{2+}$ cations concentrations than expected based on the amount of gelling agent.

Gelling pectin

According to the invention, the food composition comprises pectin. Pectin is a substance which is present in the cell wall of plants. Pectin is used as a thickening and gelling agent, and is known in the food industry to provide structure in fruit and vegetable compositions.

Pectic substances are complex heteropolymers originating from plant tissue. Pectin consists predominantly of α-D galacturonic acid units, but also contains some amount of neutral sugars such as rhamnose, xylose, arabinose, galactose and gulose. For the purpose of this invention "pectin" is expressed as "galacturonic acid", and accordingly, we define the "pectin content" in a food formulation as the weight percentage of galacturonic acid (GalA) based on the total water content of the composition. The pectin content can be determined by methods known in the art, such as for example the Saeman hydrolysis method (Englyst and Cummings (Analyst, 109(7), 937-942 (1984), Filisetti-Cozzi and Carpita (Analytical Biochemistry, 197, 157-162 (1991)).

The carboxyl groups at the sixth carbon of each galacturonic acid unit may be esterified by a methyl group or may exist as unesterified free carboxyl group. The percentage of esterified galacturonic acid units relative to the total number of galacturonic acid units in a pectin polymer is called the degree of esterification (DE). The degree of esterification can be determined according to methods known in the art, such as the base titration method (Shultz, 1965) as proposed by the Food Chemical Codex (FCC (1981). 3rd ed., (1981) National Academy of Science, Washington, DC), quantification of methanol released during de-esterification using gas chromatography (GC) (Walter et al. (1983), Journal of Food Science, 48: 1006-10070), colorimetry (Hou et al. (1999), Botanical Bulletin of Academia Sincia, 40:115-119), high performance liquid chromatography (HPLC) (Levigne S., et al. (2002), Food Hydrocolloids 16: 547-550), nuclear magnetic resonance (NMR) (Rosenbohm et al. (2003) Carbohydrate Research, 338: 637-649) and capillary zone electrophoresis (CZE) (Williams et al. (2003), Journal of Agricultural Food and Chemistry, 51: 1777-1781).

The DE resulting from such a determination is usually expressed as an average degree of esterification to account for the differences in DE of the individual polymers in a formulation. The average degree of esterification (DE) is often used to classify pectin according to physical characteristics like the ability to form gels in the presence of divalent cations like calcium. In this context the term "Low methoxyl pectin" is often used for pectins with a low degree of esterification that can be induced to form gels in the presence of calcium, while the term "High methoxyl pectin" describes pectins that don't gel in the presence of calcium due to their high content of methoxyl ester groups.

Compositions of the current invention may contain plant material such as for example fruit or vegetable pieces and purees, which are a source of pectin present in the formulation. This pectin may have a variety of different average DE, potentially leading to a broad and heterogeneous DE distribution which makes the use of an average DE to characterise the pectin in the invention unpractical. It was found, that in the context of the present invention, i.e. in high-salt food concentrates, it is the pectin with a DE of lower than 55 % that contributes to the desired texture of a semi-solid gel. Therefore, for the purpose of this invention we define as "gelling pectin" all pectin with a DE below 55%. Preferably the DE is of below 50% even more preferably below 45%, most preferably the DE is below 40%. A method to separate pectin into fractions with different DE is described, for example, by Strom, et al. (2005), Carbohydrate Polymers, Volume 60, Issue 4, 20 June 2005, Pages 467-473 . This allows to determine the sum of all pectin fractions with a DE of lower than 55 (expressed as galacturonic acid) in the (aqueous phase of the) food concentrate.

As conceivable for the skilled person, to provide the texture according to the invention, the gelling pectin is dissolved gelling pectin, i.e. dissolved in the water of the food composition of the invention.

Preferably, the amount of gelling pectin, dissolved in the water of the concentrate food composition, is present in an effective amount, i.e. to provide a food concentrate in the form of a semi-solid gel, preferably it is present in an amount of between 0.7 wt% and 10 wt%, more preferably of between 0.9 wt% and 6 wt%, even more preferably between 1.0 wt% and 5 wt%, even more preferably between 1.1 wt% and 4 wt%, most preferably between 1.2 wt% and 3 wt% based on the total water content of the food composition. This amount is to be calculated as common in the art, according to the following formula ((weight of galacturonic acid)/(weight of galacturonic acid + weight of total water content)) x 100%. As indicated, the DE of the gelling pectin is lower than 55%. Preferably, the DE of the gelling pectin is lower than 50%, preferably of lower than 45%, more preferably of lower than 40%, most preferably the DE is lower than 30%.

Pectin is an ingredient which is relatively expensive, especially when needed in significant amounts. It is an advantage of the present invention that the amount of gelling pectin can be kept relatively low, while still providing a semi-solid gel texture.

For a salt content of higher than 20 wt% on total water content, the amount of gelling pectin, with a DE below 55% as defined above, is preferably of between 1.2 wt% and 10 wt%, more preferably of between 1.3 wt% and 5 wt%, even more preferably between 1.4 wt% and 4 wt%, most preferably between 1.5 wt% and 3.5 wt%, expressed as galacturonic acid content based on the total water content of the food composition.

For a salt content of higher than 10 wt% total water content, the amount of gelling pectin, with a DE below 55% as defined above, is preferably of between 0.8 wt% and 10 wt%, more preferably of between 0.9 wt% and 5 wt%, even more preferably between 1.0 wt% and 4 wt%, most preferably between 1.2 wt% and 3 wt%, expressed as galacturonic acid content based on the total water content of the food composition.

Other ingredients

Savoury taste enhancer

To contribute to the savoury character, the concentrate food composition of the present invention may further comprise a savoury taste enhancer selected from the group consisting of monosodium glutamate (MSG), 5'-ribonucleotides, organic acid and mixtures thereof. Savoury taste enhancer is preferably present in a total amount of less than 30 wt%, more preferably of between 0.1 wt% and 30 wt%, preferably in an amount of from 1 wt% to 25 wt%, most preferably in an amount of from 5 wt% tol5 wt%, based on the weight of the total food concentrate. An individual taste enhancer selected from the group mentioned above may be present in an amount of less than 30 wt%, more preferably of between 0.1 wt% and 30 wt%, preferably in an amount of from 1 wt% to 25 wt%, most preferably in an amount of from 5 wt% tol5 wt%, based on the weight of the total food concentrate.

Taste imparting components

In the concentrates according to the invention, it is preferred that taste-imparting components are present. They may comprise one or more of yeast extract; hydrolyzed proteins of vegetables-, soy-, fish-, or meat-origin; liquid or dissolvable extracts or concentrates selected from the group consisting of meat, fish, crustaceans, plant material (e.g. herbs, fruit, vegetable) and mixture thereof; particles of meat; particles of fish; particles of crustaceans; particles of plant (e.g. herbs, vegetable, fruit); particles of fungi (e.g. mushroom); flavours and mixtures thereof. In the above, where it says "meat" this is preferably to be understood to comprise beef, pork, chicken (and other fowl). Preferably the plant pieces comprise pieces selected from the group consisting of onion, garlic, leek, carrot, parsley, tomato and mixtures thereof. Preferably the amount of taste-imparting components as set out above is from 1 wt% to 60 wt% (by weight on the total concentrate). More preferred from 2 wt% to 50 wt%, even more preferably from 5wt% to 40%.

Preferably, the amount of particles, preferably particles selected from the group of particles of meat, particles of fish, particles of crustaceans, particles of plant (e.g. herbs, vegetable, fruit), particle of fungi (e.g. mushroom) and mixtures thereof is from 0.5 wt% to 60 wt%, more preferably from 1 wt% to 50 wt%, even more preferably from 2 wt% to 40 wt% (by weight on the total concentrate). The amount of particles can be of from 0.5 to 30 wt%, more preferably of from 1 to 20 wt%, even more preferably of from 2 to 10 wt% (wet weight based on the weight of the food composition).

Fat

Fat may be present in the food concentrate according to the present invention in relatively low amounts. Fat can be liquid fat or solid fat, at ambient temperature, such as for example at 20°C. Preferably, a fat is one of the fats selected from the group consisting of chicken fat, pork fat, beef fat, and mixtures thereof. It can preferably be a fat selected from the group consisting of palm oil, sunflower oil, olive oil, rape seed oil and mixtures thereof. It can be a vegetable fat or an animal fat. Higher amounts are preferably prevented as they may interfere with the proper texture of the gel or may result in phase separation during storage or transport. Relatively high amounts of hard fat, such as e.g. saturated or hydrogenated fats may affect the desired gel texture, and therefore are not preferred. Relatively high amounts of liquid fat, such as for example oils which are liquid at room temperature, may have a weakening effect on the texture of the gel. Hence, preferably, the present invention relates to a food concentrate further comprising less than 15 wt% of fat, preferably less than 10 wt% of fat. In another preferred aspect, fat may be present in an amount of from 0.5 to 15 wt% of fat, more preferably of from 1 to 10 wt% of fat, most preferably of from 3 to 10 wt% of fat, based on the weight of the food concentrate. The amount of fat in the food concentrate is preferably as low as possible, for optimal stability. It may be preferred that fat is absent.

The concentrate food composition of the invention is a savoury food composition. Consequently, after dilution, the resulting product does preferably taste not sweet. The sugar content in the composition according to the invention is preferably lower than 50 wt%, more preferably lower than 40 wt%, even more preferably lower than 30 wt%, more preferably lower than 15wt%, most preferably lower and 10 wt%. It can be more than 1%, preferably more than 5 wt% based on the total weight of the concentrate. A suitable range could be of between 1 and 20 wt%, preferably of from 3 to 15 wt% based on the total weight of the concentrate. It may be preferred that the composition is free from sugar or free from any added sugar. Sugar polyols could also provide a sweet taste to the product resulting after dilution. The consumer may not appreciate the presence of these compounds. The concentration of sugar polyols, for example liquid sugar polyols, is preferably less than 1 wt%, more preferably less than 0.5 wt%, even more preferably less than 0.1 wt%, or less than 0.05 wt% based on the weight of the food concentrate. Most preferably the composition does not contain any added sugar polyol or added liquid sugar polyol.

The pH of the concentrate food composition (at room temperature, e.g. 20 °C) of the invention is preferably higher than 3.5, preferably between 3.5 and than 7, more preferably higher than 3.8, more preferably between 3.8 and 6, even more preferably higher than 4.0, even more preferably between 4.0 and 5.5. These levels provide a good texture of the gel and optimal taste in the product resulting after dispersing in water or a dish.

<u>Packaging/size:</u>

The food composition according to the invention is preferably packaged. It is preferably packaged in a tub, wherein the tub preferably comprises one food composition.

The weight of the food composition is preferably of between 10 gram to 500 grams, more preferably of between 15 grams and 300 grams. It may be preferred that the weight of the food composition is between 10 and 50 grams, more preferably of between 15 and 30 grams. This format is in particular useful for unit dosing for family portions. It may be preferred that the food composition has a weight of between 50 grams and 500 grams, preferably of between 100 grams and 350 grams. This packaging may be suitable for restaurant applications.

<u>Process</u>

The present invention further relates to a process to provide a composition according to the invention. The process comprises the steps of:

   a. Providing a mixture comprising:

   • Water,
   • Gelling pectin, being all pectin with a DE below 55%, wherein the gelling pectin is dissolvable in water,

   b. Heating the mixture resulting from step a),
   c. Adding sodium salt (Na salt) and potassium salt (K salt) in a total amount of from 5 wt% to 40 wt% (based on the total water content of the resulting food composition, wherein the amount of Na salt and K salt is to be calculated as ((weight of Na salt + K salt)/(weight of Na salt + K salt + weight of total water content)) *100 in %,
   d. Adding calcium salt,
   e. Packaging,
   f. Allowing the mixture to solidify,

to result in a concentrate food composition in the form of a gel.

<u>a) Providing a mixture of water and gelling pectin</u>

In a first step a), a mixture is provided comprising water and gelling pectin, wherein gelling pectin is construed as the total amount of pectin with a DE below 55%. The gelling pectin can be added as a pectin powder, which comprises gelling pectin, and can be commercially bought, for example LM pectin LC 810 from Danisco.

<u>b) Heating</u>

Step b) comprises heating of the mixture comprising water and gelling pectin. Heating is carried out e.g. to result in a solution. Heating is preferably carried out up to a temperature of the mixture of between 70°C and 95°C, preferably of between 75°C and 90 C.

<u>c) Addition of salt</u>

Step c) comprises adding of Na salt and K salt to the mixture. The salts can be added before, during or after the heating step of step b). Preferably, the salts are added after step b), which in the context of the invention resulted in gels with a better texture. Na salt and K salt are preferably added in a total amount of from 5 to 40 wt%, more preferably in a total amount of from 7 wt% to 35 wt%, even more preferably in an amount of from 10 wt% to 35 wt%, even more preferably in an amount of from 15 wt% to 30 wt%, most preferably from 20 wt% to 26 wt% based on the total water content of the final resulting food composition. Therefore, step c) of the process of the invention comprises the step of adding Na salt and K salt (before, during or after step b) in a total amount of from 5 wt% to 40 wt% (based on the total water content of the resulting food composition).

The Na salt preferably comprises NaCl. The K salt preferably comprises KCl. Na salt, preferably NaCl, is preferably added in an amount of from 4 wt% to 35 wt%, more preferably of from 4.5 wt% to 30 wt%, even more preferably of from 5 wt% to 25 wt%, most preferably of from 7 wt% to 23 wt%, based on the total water content of the food composition.

The composition will comprise preferably $Na^+$ cations. $Na^+$ cations, preferably in the form of NaCl, are preferably added in an amount of from 1.5 wt% to 15 wt%, more preferably in an amount of from 1.7 wt% to 12 wt%, even more preferably in an amount of from 2 wt% to 11 wt%, most preferably from 2.5 to 10% based on the total water content of the concentrate food composition.

K salt, preferably KCl, is preferably added in an amount of from 0.6 to 20 wt%, more preferably of from 0.8 to 19 wt%, even more preferably of from 1 to 17 wt%, most preferably of from 1.5 to 15 wt%, based on the total water content of the food composition.

The composition will comprise preferably $K^+$ cations. $K^+$ cations, preferably in the form of KCl, are preferably added in an amount of from 0.3 wt% to 13 wt%, more preferably in an amount of from 0.4 wt% to 10 wt%, even more preferably in an amount of from 0.5 wt% to 9 wt%, most preferably from 0.8 to 8 wt% based on the total water content of the concentrate.

Preferably, Na salt and K salt are added in amounts to obtain a weight ratio of $(Na^+/(Na^++K^+))*100$ (in %) of from 15 to 95% , more preferably from 35 to 93%, even more preferably from 40 to 92%, even more preferably from 45 to 90%, most preferably of from 50 to 85%, in the final resulting composition. This ratio is calculated, for example as following:

| e.g. in 75 g of water | | Ratio: $(Na^+/(Na^++K^+))*100$ (in %) |
|---|---|---|
| NaCl (g) =20 | $Na^+$cations=7.9 (g) | |
| KCl (g) =5 | $K^+$ cations =2.6(g) | 75% |
| | $Na^+$ cations +$K^+$ cations =10.5(g) | |

d) Adding calcium salt

Calcium salt is added in step d). Adding calcium salt can be carried out during step c), after step c) or after packaging step e). Preferably $Ca^{2+}$ cations are added in an amount of from 0.01 wt% to 3 wt% $Ca^{2+}$, more preferably from 0.02 wt% to 2 wt% $Ca^{2+}$, even more preferably from 0.03 wt% to 1.5 wt% $Ca^{2+}$, most preferably from 0.04 wt% to 1 wt% $Ca^{2+}$ based on the total water content of the resulting food concentrate. Calcium salt is preferably added in an amount to provide these amounts of $Ca^{2+}$ cations in the resulting concentrate food composition of the invention.

Preferably $Ca^{2+}$cations are added in an amount of from 10 to 2000 mg $Ca^{2+}$/g of gelling pectin, more preferably from 15 to 1000 mg $Ca^{2+}$/g of gelling pectin, even more preferably from 20 to 800 mg $Ca^{2+}$/g of gelling pectin, most preferably between 30-400 mg $Ca^{2+}$/g of gelling pectin. It might be preferred that $Ca^{2+}$ is added in an amount of from 100-300 mg $Ca^{2+}$/g of gelling pectin.

The mixture including the salt is brought into solution. The salts are normally added to the mixture of water and gelling pectin when this mixture is warm. It can be preferred to heat the solution, for example to speed up the dissolution rate of the salts. It is noted that the salt can be present in an amount which is higher than the saturation point of the salt. In this case, salt crystals may appear e.g. at the surface of the resulting concentrate.

Addition of other ingredients

The process may further comprise the step of addition of taste imparting components and/or savoury taste enhancer. This step may comprise adding vegetable pieces, fruit pieces, herb pieces, meat pieces, fungi pieces and mixtures thereof. Taste imparting components, savoury taste enhancers and fat can be added in the amounts as described above under "other ingredients". For example, the taste imparting components may be added in an amount of from 1 to 60 wt%, based on the weight of the total resulting food composition. The savoury taste enhancer may be added in an amount of from 0.1 to 30 wt%, based on the weight of the total resulting food composition.

Fat may be added in an amount of below 15 wt%, more preferably below 10 wt%, based on the weight of the resulting concentrate food composition.

The step of addition of taste imparting components and/or savoury taste enhancer can be carried out during or after step a), and preferably before solidification step f). Preferably, this step is carried out during or after step b).

e) Packaging

In step e) the mixture comprising water, gelling pectin, Na salt, K salt and possibly taste imparting ingredients and/or savoury taste enhancer is packaged. The mixture may be in liquid form and is transferred to a packaging, such as a tub. The mixture may further comprise calcium salt. Packaging step e) is preferably carried out after addition of calcium salt, i.e. after step d), but may be carried out after step c), when calcium is not present yet. In that case, calcium salt may be added to the mixture, when this is in a packaging.

f) Solidification

In step f), the mixture is allowed to solidify. Solidification preferably comprises gellification of the mixture. Solidification of the mixture comprising water, gelling pectin and salt preferably comprises cooling, preferably up to a temperature of the mixture of between 0 °C and 60°C, preferably of between 5 °C and 55 °C, most preferably of between 10 °C and 40 °C. Solidification preferably takes place in the packaging, i.e. after step e).

Use

In a further aspect, the present invention relates to the use of the concentrate food composition according to the invention to prepare a bouillon, a soup, sauce, gravy or a seasoned dish. The use according to the present invention preferably comprises diluting the concentrate food composition according to the invention, at least part of it, in an aqueous liquid, or mixing it into a dish. The aqueous liquid is preferably water, but can be a sauce, a soup, milk etc. The dish can be a vegetable dish, meat, fowl, fish etc. The temperature of the aqueous solution or dish is preferably of between 60°C and 100°C, more preferably of between 70°C and 95°C. The food composition according to the invention dissolves relatively fast in hot water (e.g. 95°C). It may be preferred that 25 gram dissolves in 500 ml of hot water within 3 minutes, preferably within 2 minutes.

The dissolving time is measured by a conductivity measurement and by visual inspection, as known by a person skilled in the art. The dissolution test used is described below. As known in the art, in the context of this invention, dissolving is generally understood as the process wherein the semi-solid gel melts and goes into solution in a solvent, e.g. water or a liquid dish. Dissolving can be correlated with the melting properties of the semi-solid gel. Dissolving can be measured via the conductivity increase in the solvent.

In the context of the present invention we understand as dispersing the process of breaking a gel into smaller parts of a given size and distributing said particles through an aqueous liquid or dish.

To quantify the dispersing properties a Dispersion Test can be used where the mass decrease of large semi-solid gel particles over time is measured. This mass decrease is caused by breaking apart of said large semi-solid gel particles into smaller particles. The food composition according to the invention disperses relatively fast in hot water (e.g. 95 °C). It may be preferred that 25 gram disperses in 1L of hot water within 3 minutes, preferably within 2 minutes.

During dispersion, (partly) dissolving of gel particles may take place as well. The change in conductivity and mass decrease to analyse relative dissolving and dispersion can be measured according to the following method:

Dissolution test:

Equipment:

- Heating plate with magnetic stirring
- Magnetic stirrer
- Conductivity meter
- Video camera
- Transparent glass beaker (1L)
- Metal mesh frame to hold the gel ~2 cm above the bottom of the beaker.

Procedure:

- 500 ml of tap water is heated to boiling temperature and added to a glass beaker of 1 litre.
- A temperature probe and conductivity probe are placed in the beaker.
- A video camera is adjusted to record the dissolution time (for the visual inspection)
- Once the temperature reaches 100°C, the conductivity measurement and the visual inspection (video recording) are started.
- Approximately 25-30 g of a gel product (shape stable, self-sustaining at RT) is carefully immersed in the hot water and held in place by a meshed metal frame.

- A magnetic stirrer is placed at the bottom of the glass beaker and below the metal frame that holds the gel product. The stirring is kept at 300rpm and is immediately started after immersing the gel product to the boiling water. The temperature is kept between 95-100 °C throughout the test.
- The stirrer does not get in contact with the gel food composition during the test.
- The dissolution time is determined as the time at which 90% of the plateau value for the conductivity is reached and/or by visual inspection (gel "disappearance", recorded video), see Figure 3.
- In case variations between conductivity determination and visual inspection occurs, the visual inspection value (time) is taken as the dissolution time.

Dispersion test:

Equipment:

- A kitchen food preparation machine (Kenwood Cooking chef major KM070 series), with temperature control (one stirring speed for temperatures above 60°C).

- Flexi beater stirrer attachment

- Sieve: 1 mm mesh

- Balance (at least $\pm 0.1$g precision)

Procedure:

- 1L of water is added to the Kenwood chef bowl
- The temperature of the machine is set to 95-97°C.
- The gel product to be analysed is weighed (e.g. 25-30g gel composition (weight$_{t=0}$ in g))
- When a temperature of 95-97°C is reached, mixing is stopped. The gel sample is inserted into the food preparation machine, and timer and stirrer are started. After a set period (see below), the product is sieved (water + gel food composition) through a 1 mm mesh sieve.
- The amount of product left in the sieve is weighed.
- Measurements are taken after a period of dispersion of, for example, 15s, 30s, 1min, 2min, 4min, 8min at least in duplicates.
- To determine the weight of any particles present in the gel product, as a reference a dispersion time is chosen which is sufficiently long enough to essentially disperse the entire gel product. The weight of the material which is left in the sieve is not of gel particles but of other particles which were present in the original gel product, such as vegetable particles, meat pieces etc. In the case of the present Examples, a dispersion time of 10 min was sufficient to disperse the entire gel product and determine the weight of the remaining particles.

Calculation:

- The % of gel food composition not dispersed at the set times (e.g. 15s, 30s, 1min, 2min, 4min, 8min) is calculated as follows:

$$[\%gel\ not\ dispersed:\ (weight_{t=ti}-weight_{t=10\ min})/\ (weight_{t=0}-weight_{t=10\ min})*100]$$

Wherein:

- weight$_{t=10\ min}$ is the weight of product (particles) left in the sieve after 10 min, i.e. when the entire gel product has been dispersed).

- weight$_{t=ti}$ is the weight of product left in the sieve at the set times of, for example, 15s, 30s, 1min, 2min, 4min, 8min
- weight$_{t=0}$ is the initial weight of the product
- (weight$_{t=0}$-weight$_{t=10\ min}$) = "gel weight", i.e. product weight without particles larger than 1 mm mesh which are not gel particles(retained by sieve)

For example:

- Initial product (gel food composition) weight=25g=> weight$_{t=0}$
- Weight product left after 30s= 5 g (including undispersed gel and particles larger than 1 mm mesh size) =>weight$_{t=30s}$
- Weight product left after 10 min: 3 g (control: particles larger than the mesh size, gel is assumed completely dispersed after 10 min for comparative purpose) =>weight$_{t=10\ min}$.

$$[\%gel\ not\ dispersed:\ (5-3)/(25-3)*100=9\%]$$

Further advantages

The present invention provided a high-salt concentrate food composition which was in the form of a semi-solid gel. The unexpected synergistic effect of Na$^+$ and K$^+$ cations in a gel in a concentrate food composition (high-salt) when gelling pectin (with DE<55%) is used allowed to use a relatively low level of pectin while maintaining a semi-solid gel, suitable for unit dosing, even at high-salt levels. The concentrate food composition showed a fast dissolution and dispersion. The resulting semi-solid gels did not show a significant increase in viscosity upon dissolving the product in hot water followed by cooling. A further advantage observed was that the amount of Ca$^{2+}$ could be reduced compared to what is expected based on the pectin content, while maintaining a proper gel strength. Shorter dissolving and/or dispersing times can be reached. It was further observed, that the pectin-textured concentrate food compositions of the invention did not show significant syneresis upon storage.

The present invention will now be exemplified by the following, non-limiting examples:.

## EXAMPLES

**Example 1: Synergistic effect on firmness of using K salt in combination with Na salt.**

The synergistic effect of the Na salt and K salt on firmness of the gel at high-salt concentrations was investigated for a ratio of (Na$^+$/(Na$^+$+K$^+$))*100 (in%) of 63%.

Product preparation method:

a) Pectin powder (as purchased) was added to cold water and stirred with mechanical overhead stirrer until full dispersion/hydration was achieved

b) The pH of the pectin-water mixture (step a))was adjusted with NaOH 1M to pH of approximately 4.9

c) The mixture (step b)) was heated to 95 °C and kept at this temperature for ~3 min

d) The salt mixture as described in the example composition tables (i.e. NaCl, MgCl$_2$, CaCl$_2$.2H$_2$O,CaSO$_4$, KCl) was added and the mixture was transferred to a plastic tub

e) The composition was allowed to cool down to RT to form a semi-solid gel

f) Product firmness (in g) was measured according to the method specified in the description.

Table 1a: Sodium salt only

| | Pectin powder LC 810[a] (%) | Water (%) | NaCl (%) | KCl (%) | MgCl$_2$ (%) | Ca$^{2+}$ (b) (%) | Total (%) | (Na$^+$/(Na$^+$+ K$^+$))*100 (in%) |
|---|---|---|---|---|---|---|---|---|
| compEx. 1A | 4.0% | 95.7% | 0.0% | 0.0% | 0.0% | 0.10% | 100% | 100% |
| compEx. 1B | 3.9% | 94.4% | 1.2% | 0.0% | 0.0% | 0.10% | 100% | 100% |
| compEx. 1C | 3.9% | 93.2% | 2.5% | 0.0% | 0.1% | 0.10% | 100% | 100% |
| compEx. 1D | 3.7% | 89.8% | 5.9% | 0.0% | 0.1% | 0.09% | 100% | 100% |
| compEx. 1E | 3.5% | 84.7% | 11.1% | 0.0% | 0.2% | 0.09% | 100% | 100% |
| compEx. 1F | 3.3% | 80.1% | 15.8% | 0.0% | 0.3% | 0.08% | 100% | 100% |
| compEx. 1G | 3.2% | 76.0% | 20.0% | 0.0% | 0.4% | 0.08% | 100% | 100% |
| compEx. 1H | 3.0% | 72.2% | 23.8% | 0.0% | 0.5% | 0.07% | 100% | 100% |

[a] *LC 810 (Danisco average DE typically 37, contains gelling pectin), contains ~62% galacturonic acid (GalA). Gelling pectin concentration was kept constant on the total water content.*
[b] Ca$^{2+}$ from CaCl$_2$.2H$_2$O or Ca$_2$SO4

Table 1b: Sodium salt in combination with potassium salt (NaCl+KCl)

| | Pectin powder LC 810[a] (%) | Water % | NaCl % | KCl % | MgCl$_2$ % | Ca$^{2+}$ (b) (%) | Total | (Na$^+$ /(Na$^+$+K$^+$))*100 (in%) |
|---|---|---|---|---|---|---|---|---|
| compEx.1 I | 3.9% | 94.4 % | 0.9% | 0.4% | 0.0% | 0.10% | 100% | 63% |
| compEx.1 J | 3.9% | 93.2 % | 1.7% | 0.7% | 0.1% | 0.10% | 100% | 63% |
| 1K | 3.7% | 89.8 % | 4.1% | 1.8% | 0.1% | 0.09% | 100% | 63% |
| 1L | 3.5% | 84.7 % | 7.8% | 3.4% | 0.2% | 0.09% | 100% | 63% |
| 1M | 3.3% | 80.1 % | 11.0% | 4.8% | 0.3% | 0.08% | 100% | 63% |
| 1N | 3.2% | 76.0 % | 13.9% | 6.0% | 0.4% | 0.08% | 100% | 63% |
| 1O | 3.0% | 72.2 % | 16.6% | 7.2% | 0.5% | 0.07% | 100% | 63% |

[a] *LC 810 (Danisco average DE typically 37, contains gelling pectin), contains ~62% galacturonic acid (GalA). Gelling pectin concentration was kept constant on the total water content.*
[b] Ca$^{2+}$ from CaCl$_2$.2H$_2$O or Ca$_2$SO4

Table 1c: Comparison of Firmness

| Salt wt% total water content | Firmness (g) | | Firmness (g) | | Increase in Firmness compared to gels with sodium salt (1A to 1H) |
|---|---|---|---|---|---|
| | (Na$^+$/(Na$^+$+K$^+$))*100 (in%) =100% | | (Na$^+$/(Na$^+$+K$^+$))*100 (in%) =63% | | |
| 0 | compEx. 1A | 498±10 | - | - | - |

(continued)

| Salt wt% total water content | Firmness (g) | | Firmness (g) | | Increase in Firmness compared to gels with sodium salt (1A to 1H) |
|---|---|---|---|---|---|
| | $(Na^+/(Na^++K^+))*100$ (in%) =100% | | $(Na^+/(Na^++K^+))*100$ (in%) =63% | | |
| 0.9% | compEx. 1B | 456±58 | compEx.1 I | 610±31 | 34% |
| 1.7% | compEx. 1C | 527±56 | compEx.1 J | 442±5 | -16% |
| 4.1% | compEx. 1D | 309±18 | 1K | 380±35 | 23% |
| 7.8% | compEx. 1E | 123±16 | 1L | 200±40 | 63% |
| 11.0% | compex. 1F | 62±1 | 1M | 143±4 | 131% |
| 13.9% | compEx. 1G | 40±3 | 1N | 242±7 | 505% |
| 16.6% | compEx. 1H | 15±1 | 1O | 195±11 | 1200% |

### Result:

Shape stable products in the form of a gel were obtained. The pH of the final samples (1A to 1O) was between 3.5-4.5.

It was observed that gels with a total salt content of higher than 6% were much stronger when K salt was used in combination with Na salt (1-K to 1-O), compared to the gels in which Na salt was used not in combination with K salt (1-D-1-H).

The increase in firmness when using Na salt in combination with K salt was up to >1200% (12 times firmer) for 23% total salt concentration (NaCl + KCl), compared to the situation when no KCl was present, compare Comp.Ex 1H with Example 1O. The experiments show further that the effect is most significant at high-salt levels.

**Example 2: Synergistic effect on firmness of using $K^+$ salt in combination with $Na^+$ salt for pectin gels at 10% salt based on the total water content.**

To investigate the synergistic effect of $Na^+$ and $K^+$ cations on firmness of the gel, different ratios of $Na^+$ to $K^+$ cations were compared. The effect of different $(Na^+/(Na^++K^+))*100$ (in %) ratios - ratios from 16 to 69% was analyzed at a salt level of 10%. Gels were prepared as indicated in Example 1. The pH of the resulting gels was between 3.5 and 4.5.

### Result:

| | Pectin powder 810[a] (%) | Water (%) | NaCl (%) | KCl (%) | Ca++ (%) [b] | Total | $(Na^+/(Na^++K^+))*100$ (in%) (%) |
|---|---|---|---|---|---|---|---|
| Comp. Ex. 2A | 3.6% | 86.5% | 9.6% | 0.0% | 0.09% | 100% | 100% |
| 2B | 3.6% | 86.5% | 7.2% | 2.4% | 0.09% | 100% | 69% |
| 2C | 3.6% | 86.5% | 6.9% | 2.7% | 0.09% | 100% | 65% |
| 2D | 3.6% | 86.5% | 6.4% | 3.2% | 0.09% | 100% | 60% |
| 2E | 3.6% | 86.5% | 5.8% | 3.8% | 0.09% | 100% | 53% |
| 2F | 3.6% | 86.5% | 4.8% | 4.8% | 0.09% | 100% | 43% |
| 2G | 3.6% | 86.5% | 3.2% | 6.4% | 0.09% | 100% | 27% |
| 2H | 3.6% | 86.5% | 1.9% | 7.7% | 0.09% | 100% | 16% |

(continued)

| | Pectin powder 810[a] (%) | Water (%) | NaCl (%) | KCl (%) | Ca++ (%) [b] | Total | $(Na^+/(Na^++K^+))*100$ (in%) (%) |
|---|---|---|---|---|---|---|---|
| Comp. Ex. 2I | 3.6% | 86.5% | 0.0% | 9.6% | 0.09% | 100% | 0% |

[a] LC 810 (Danisco average DE typically 37, contains gelling pectin), contains ~62% galacturonic acid (GalA). Gelling pectin concentration was kept constant on the total water content.

[b] Calcium from $CaCl_2.2H2O$

| | $(Na^+/(Na^++K^+))*100$ (in%) (%) | Firmness (g) | Increase in Firmness compared to Na-gels (2A) | Increase in Firmness compared to K-gels (2I) |
|---|---|---|---|---|
| Comp. Ex. 2A | 100% | 146±23 | Na+ only | Na+ only |
| 2B | 69% | 210±16 | 44% | 438% |
| 2C | 65% | 280±46 | 92% | 618% |
| 2D | 60% | 208±11 | 42% | 433% |
| 2E | 53% | 220±27 | 51% | 464% |
| 2F | 43% | 233±25 | 60% | 497% |
| 2G | 27% | 225±23 | 54% | 477% |
| 2H | 16% | 181±3 | 24% | 364% |
| Comp. Ex. 2I | 0% | 39±6 | K+ only | K+ only |

All gels at 10% wt of total salt (NaCl+KCl), based on the total water content) wherein the combination of K salt and Na salt was used at different ratios (Example 2B to 2H) were firmer (about 5 times) than gels using only Na salt (2A) or only K salt (21), in this way, illustrating the synergistic effect on the product firmness for the ratios $(Na^+/(Na^++K^+))*100$ (in%) from 69 to 16% (2-A to 2H).

### Example 3: Synergistic effect on firmness_of using K salt in combination with Na salt for pectin gels at 10% salt based on the total water content.

To investigate the synergistic effect of $Na^+$ and $K^+$ cations on firmness of the gel, different ratios of $Na^+$ to $K^+$ cations were compared. The effect of different $(Na^+/(Na^++K^+))*100$ (in %) ratios - ratios from 75 to 95% was analyzed, at a salt level of 10%. Gels were prepared as indicated in example 1. The pH of the gels was between 3.5-4.5.

**Result:**

| | Pectin powder LC 810[a] (%) | Water (%) | NaCl (%) | KCl (%) | Ca++ (%)[b] | Total | $(Na^+/(Na^++K^+))*100$ (in%) |
|---|---|---|---|---|---|---|---|
| Comp. Ex.3A | 3.5% | 86.6% | 9.6% | 0.0% | 0.09% | 100% | 100% |
| 3B | 3.5% | 86.6% | 9.2% | 0.4% | 0.09% | 100% | 95% |
| 3C | 3.5% | 86.6% | 8.9% | 0.7% | 0.09% | 100% | 90% |
| 3D | 3.5% | 86.6% | 8.5% | 1.1% | 0.09% | 100% | 85% |
| 3E | 3.5% | 86.6% | 8.1% | 1.5% | 0.09% | 100% | 80% |

(continued)

| | Pectin powder LC 810[a] (%) | Water (%) | NaCl (%) | KCl (%) | Ca++ (%)[b] | Total | $(Na^+/(Na^++K^+))$ *100 (in%) |
|---|---|---|---|---|---|---|---|
| 3F | 3.5% | 86.6% | 7.8% | 2.0% | 0.09% | 100% | 75 % |
| Comp. Ex. 3G | 3.5% | 86.6% | 0.0% | 9.6% | 0.09% | 100% | 0% |

Pectin powder

[a] LC 810 (Danisco average DE typically 37, contains gelling pectin), contains ~62% galacturonic acid (GalA). Gelling pectin concentration was kept constant on the total water content.

[b] Calcium from $CaCl_2.2H2O$

| | $(Na^+/(Na^++K^+))$*100 (in%) | Firmness (g) | Increase in Firmness compared to $Na^+$-gels (3A) | Increase in Firmness compared to $K^+$-gels (3G) |
|---|---|---|---|---|
| Comp. Ex. 3A | 100% | $133\pm10$ | $Na^+$ only | $Na^+$ only |
| 3B | 95% | $166\pm21$ | 25% | 108% |
| 3C | 90% | $170\pm6$ | 28% | 113% |
| 3D | 85% | $165\pm21$ | 24% | 106% |
| 3E | 80% | $188\pm2$ | 41% | 135% |
| 3F | 75 % | $208\pm15$ | 56% | 160% |
| Comp. Ex. 3G | 0% | $80\pm6$ | $K^+$ only | $K^+$ only |

All gels at 10% wt salt (NaCl+KCl), wt% based on the total water content) wherein a combination of $K^+$ cations and $Na^+$ cations was used at different ratios (3B to 3F) were firmer than gels using only $Na^+$ cations (3A) or only $K^+$ cations (3G) . For the ratios $Na^+/(Na^++K^+)$*100 (in %) from 95 to 75% the synergistic effect on the product firmness is demonstrated

**Example 4: Synergistic effect on product firmness_of using K salt in combination with Na salt for pectin gels at 23% salt based on the total water content.**

The effect of different $(Na^+/(Na^++K^+))$ *100 (in %) ratios - from 16 to 69%, were analyzed, at a salt level of 23%. Gels were prepared as indicated in example 1. The pH of the resulting gels pH was between 3.5-4.5.

**Result:**

| | Pectin powder LC 810[a] (%) | Water (%) | NaCl (%) | KCl (%) | Ca++(%) [b] | Total | $(Na^+/(Na^++K^+)$ *100 (in%) |
|---|---|---|---|---|---|---|---|
| Comp. Ex. 4A | 3.0% | 74.4% | 22.2% | 0.0% | 0.08% | 100% | 100% |
| 4B | 3.0% | 74.4% | 16.7% | 5.6% | 0.08% | 100% | 69% |
| 4C | 3.0% | 74.4% | 15.9% | 6.3% | 0.08% | 100% | 65% |
| 4D | 3.0% | 74.4% | 14.8% | 7.4% | 0.08% | 100% | 60% |
| 4E | 3.0% | 74.4% | 13.3% | 8.9% | 0.08% | 100% | 53% |
| 4F | 3.0% | 74.4% | 11.1% | 11.1% | 0.08% | 100% | 43% |

(continued)

| | Pectin powder LC 810[a] (%) | Water (%) | NaCl (%) | KCl (%) | Ca++(%) [b] | Total | $(Na^+/(Na^++K^+))$ *100 (in%) |
|---|---|---|---|---|---|---|---|
| 4G | 3.0% | 74.4% | 7.4% | 14.8% | 0.08% | 100% | 27% |
| 4H | 3.0% | 74.4% | 4.4% | 17.8% | 0.08% | 100% | 16% |
| Comp. Ex. 4I | 3.0% | 74.4% | 0.0% | 22.2% | 0.08% | 100% | 0% |
| [a] LC 810 (Danisco average DE typically 37, contains gelling pectin), contains ~62% galacturonic acid (GalA). Gelling pectin concentration was kept constant on the total water content. [b] Calcium from $CaCl_2.2H2O$ | | | | | | | |

| | $(Na^+/(Na^++K^+))$*100 (in%) | Firmness (g) | Increase in Firmness compared to $Na^+$-gels (4A) | Increase in Firmness compared to $K^+$-gels (41) |
|---|---|---|---|---|
| Comp. Ex. 4A | 100% | 31±0 | $Na^+$ only | $Na^+$ only |
| 4B | 69% | 89±5 | 187% | 170% |
| 4C | 65% | 100±5 | 223% | 203% |
| 4D | 60% | 97±3 | 213% | 194% |
| 4E | 53% | 114±4 | 268% | 245% |
| 4F | 43% | 101±10 | 226% | 206% |
| 4G | 27% | 47±3 | 52% | 42% |
| 4H | 16% | 40±4 | 29% | 21% |
| Comp. Ex. 4I | 0% | 33±1 | $K^+$ only | $K^+$ only |

At a total salt content of 23% (NaCl+KCl, based on the total water content), all gels wherein a combination of $K^+$ cations and $Na^+$ cations was used at different ratios (Examples 4B to 4H) were firmer than gels using only $Na^+$ cations (comparative example 4A) or only $K^+$ cations (comparative example 41). For the ratios $(Na^+/(Na^++K^+))$*100 (in %) from 16 to 69% the synergistic effect on the firmness is demonstrated

**Example 5: Synergistic effect on firmness_of using $K^+$ salt in combination with $Na^+$ salt for pectin gels at 23% salt based on the total water content.**

The effect of different $(Na^+/(Na^++K^+))$*100 (in %) ratios, from 75 to 95% was analyzed at 23% wt salt (NaCl+KCl), based on the total water content.

Gels were prepared as indicated in example 1.

| | Pectin powder LC 810[a] (%) | Water (%) | NaCl (%) | KCl (%) | Ca++ (%) [b] | Total | $(Na^+/(Na^++K^+))$ *100 (in%) |
|---|---|---|---|---|---|---|---|
| Comp. Ex. 5A | 3.0% | 74.4% | 22.2% | 0.0% | 0.08% | 100% | 100% |
| 5B | 3.0% | 74.4% | 21.4% | 0.9% | 0.08% | 100% | 95% |
| 5C | 3.0% | 74.4% | 20.5% | 1.7% | 0.08% | 100% | 90% |
| 5D | 3.0% | 74.4% | 19.6% | 2.6% | 0.08% | 100% | 85% |
| 5E | 3.0% | 74.4% | 18.8% | 3.4% | 0.08% | 100% | 80% |
| 5F | 3.0% | 74.4% | 17.8% | 4.4% | 0.08% | 100% | 75% |

(continued)

|  | Pectin powder LC 810[a] (%) | Water (%) | NaCl (%) | KCl (%) | Ca++ (%) [b] | Total | (Na+/(Na++K+)) *100 (in%) |
|---|---|---|---|---|---|---|---|
| Comp. Ex.5G | 3.0% | 74.4% | 0.0% | 8.3% | 0.08% | 86% | 0% |

[a] LC 810 (Danisco average DE typically 37, contains gelling pectin), contains ~62% galacturonic acid (GalA). Gelling pectin concentration was kept constant on the total water content.
[b] Calcium from $CaCl_2.2H2O$

|  | (Na+/(Na++K+))*100 (in%) | Firmness (g) | Increase in Firmness compared to Na+-gels (5A) | Increase in Firmness compared to K+-gels (5G) |
|---|---|---|---|---|
| Comp. Ex. 5A | 100% | 27±4 | Na+ only | Na+ only |
| 5B | 95% | 43±12 | 59% | -7% |
| 5C | 90% | 35±2 | 30% | -24% |
| 5D | 85% | 50±10 | 85% | 9% |
| 5E | 80% | 48±4 | 78% | 4% |
| 5F | 75% | 66±6 | 144% | 43% |
| Comp. Ex. 5G | 0% | 46±44 | K+ only | K+ only |

**Result:**

All gels wherein a combination of K salt and Na salt was used at different ratios (Examples 5B to 5F) were stronger than gels using either only Na salt (comparative example 5A) or only K salt (comparative example 5G), even at relatively low K+ cations levels (Examples 5B and 5C versus comparative example 5A) .

Examples 5D-5F showed gels that where firmer than both gels wherein only Na salt (5A) was used and only K salt (5G) was used.

For the ratios (Na+/ (Na++K+))*100 (in%) from 75 to 95% the synergistic effect on the firmness is demonstrated

**Example 6:- Firmness and dissolution behaviour**

In Example 6 the dissolution behaviour is compared between pectin gels comprising both Na+ cations and K+ cations and gels comprising only Na+ cations.

Gels were prepared as indicated in Example 1. The pH of the resulting gels was between 3.9-4.1.

**Result:**

Table 6a: (this invention) Pectin gels with Sodium and Potassium salts

| (Na$^+$/(Na$^+$+K$^+$))*100 (in%) =65%) | | | | | | | | | |
|---|---|---|---|---|---|---|---|---|---|
| | Pectin powder LC 810 (%)[a] | Water (%) | NaCl (%) | KCl (%) | Ca++ (%)[b] | Total | Firmness (g) | Brittleness (mm) | Gel behavior | Dissolution time (min) |
| 6A | 3.7% | 73.9% | 15.7% | 6.3% | 0.10% | 100% | 205±19 | 5.1±0.3 | Gel | 2.12±0.00 |
| 6B | 3.3% | 74.2% | 15.8% | 6.3% | 0.09% | 100% | 130±6 | 5.4±0.1 | Gel | 1.60±0.0 2 |
| 6C | 2.9% | 74.6% | 15.9% | 6.4% | 0.08% | 100% | 91±4 | 5.5±0.2 | Gel | 1.43±0.0 2 |
| 6D | 2.2% | 75.2% | 16.% | 6.4% | 0.06% | 100% | 33±4 | 7.0±0.3 | Gel | 0.83±0.0 1 |

[a] LC 810 (Danisco average DE typically 37, contains gelling pectin), contains ~62% galacturonic acid (GalA).
[b] Calcium from CaCl$_2$.2H2O

Table 6b: (comparative example) Pectin gels with Sodium salt (only)

| (Na+/(Na++K+))*100 (in%) =100%) | | | | | | | | | | |
|---|---|---|---|---|---|---|---|---|---|---|
| | Pectin powder LC 810 (%)[a] | (%) Water | (%) NaCl | (%) KCl | Ca++ (%)[b] | Total | Firmness (g) | Brittleness (mm) | Gel behavior | Dissolution time (min) |
| 6E | 3.7% | 73.9% | 22.0% | 0% | 0.10% | 100% | 52±4 | 6.7±0.2 | Gel | 1.69±0.00 |
| 6F | 3.3% | 74.2% | 22.1% | 0% | 0.09% | 100% | 44±8 | 7.5±0 .5 | Gel | 1.18±0. 03 |
| 6G | 2.9% | 74.6% | 22.2% | 0% | 0.08% | 100% | 21±5 | 7.4±0.8 | Weak Gel | 0.83±0. 01 |
| 6H | 2.2% | 75.2% | 22.4% | 0% | 0.06% | 100% | 6±1 | 9.5±0 .3 | Not gel | * |

*Not measured. Product was not a shape stable gel.*

[a] *LC 810 (Danisco average DE typically 37, contains gelling pectin), contains ~62% galacturonic acid (GalA).*
*Gelling pectin concentration was kept constant on the total water content.*

[b] *Calcium from $CaCl_2.2H2O$*

For the products of Examples 6A to 6D (this invention), the ratios $(Na^+/(Na^++K^+))*100$ (in%) were kept constant at 65%. For all pectin concentrations, the pectin gels with Na salt and K salt were much firmer than Na salt (only) pectin gels (up to 5 times firmer), even at lower levels of gelling agent.

Firmer gels with comparable dissolution time:

The dissolution times of the gels according to the invention was compared to those of gels prepared without K salt. The dissolution time was measured according to the method described in the description. The gels according to the invention showed an improved dissolution behaviour. For example: Example 6B (this invention) was much stronger than comparative example 6E. Despite the higher firmness of the product of Example 6B, products 6B and 6E had comparable dissolution times.

**Example 7: Bouillon concentrate in the form of a gel.**

A bouillon concentrate according to the invention was prepared, comprising the ingredients as indicated in the table below. The concentrate comprises 24% salt (NaCl+KCl), using different ratios of NaCl and KCl (Examples 7B and 7C)). The products of comparative example 7A and examples 7B and 7C were prepared as indicated in example 1. The savoury mix was added after during the heating step, together with the salt mixtures. The gels were analysed according to the method described in the description. The concentrate is compared to a Na salt pectin bouillon gel (comparative example 7A).

**Result:**

|  | Comp. Ex. 7A | 7B | 7C |
|---|---|---|---|
| $(Na^+/ (Na^++K^+)) *100$ (in%) | 94% | 74% | 61% |
| Water | 65.00 | 65.00 | 65.00 |
| Pectin powder LC 810 (%)a | 2.28 | 2.28 | 2.28 |
| Savoury Mixb | 16.08 | 16.08 | 16.08 |
| NaCl | 16.25 | 13.00 | 10.56 |
| KCl | 0 | 3.25 | 5.69 |
| $CaCl_2 2H_2O$ | 0.40 | 0.40 | 0.40 |
| Total | 100.00 | 100.00 | 100.0 |

a) *LC 810 (Danisco average DE typically 37, contains gelling pectin), contains ~62% galacturonic acid (GalA). Gelling pectin concentration was kept constant on the total water content.*
(b) Savoury mix contains sugar, yeast extract, meat powder base, parsley, pepper, flavours. Also contains 7.6% $Na^+$, 3.1% $K^+$ and 0.1% $Ca^{2+}$. These amounts were taken into account in the calculations).

Gel characterization (according to the method as mentioned in the description):

| Shape stable | not shape stable | yes | yes |
|---|---|---|---|
| G'/G" at 20 °C | >1 | >1 | >1 |
| Firmness (g) *preferred>* 10g | 11±1 | 65±6 | 69±12 |
| Brittleness (mm) *preferred* < 8 mm | 9.1±0.4 (Paste-like, no breaking point, low firmness) | 6.4±0.2 (brittle gel, clear breaking point) | 5.5±0.3 (brittle gel, clear breaking point) |
| Recovery (%) *preferred<* 80% | 53±6 | 35±4 | 40±4 |

(continued)

| Shape stable | not shape stable | yes | yes |
|---|---|---|---|
| Product characteristic | -low firmness -no breaking point (no brittleness)-paste | gel | gel |
| Dissolution time (min) | Not measured Not shape stable | 1.4 min | 1.5 min |
| pH | 4.5 | 4.5 | 4.6 |

The products of examples 7B and 7C (this invention) with combined Na and K salts were shape stable gels compared to the product of comparative example 7A which was not a gel at the same pectin concentration as 7B and 7C. The firmness of the products of examples 7B and 7C, with combined Na and K salts was up to 6 times higher compared to the strength of comparative example 7A (Na salt 94% pectin product).The products of examples 7B and 7C showed a short dissolution time (1.4 and 1.5 minutes respectively), as measured according to the method as described in the description.

**Example 8:**

This example illustrates the absence of undesired increase of viscosity upon cooling of a dissolved product of the invention. Further, the fast dispersion of the product is demonstrated. A product of the invention is compared to a concentrate food composition in the form of a gel, wherein xanthan and locust bean gum (LBG) are used as gelling agent.
The product according to the invention (Example 8a) was the product as described in Example 6c (2.9% pectin powder LC810, 74.6% water, 15.9% NaCl, 6.4% KCl, 0.08% Ca ions).
Comparative example 8b (X-LBG gel) was prepared as follows:

- The X-LBG gel composition according to the recipe in Table 8a was prepared in the following way, in a Thermomix TM31 equipment (Vorwerk, Germany).

- Water was added to the equipment vessel

- All ingredients (salt, Xanthan, LBG) were added quickly (30 sec) via the vessel opening at speed 5-6.

- The mixture was heated up to 85 °C and kept at this temperature for at least 3 min while stirring (speed 5-6) .

- The resulting mixture was hot filled plastic containers, cooled quiescently to gel and analyzed.

Table 8a

| Comparative example 8b | | (%wt) |
|---|---|---|
| X-LBG | Xanthan (GRINDSTED® 80, Danisco) | 0.3% |
| Comparative example 2 | Locust bean gum (GRINDSTED® LBG 246, Danisco) | 0.3% |
| Model system | Water | 74.6% |
| | NaCl | 24.7% |
| | Total | 100.0% |

Both products had the appearance of a gel, they showed a similar Firmness (in g), and they had a similar NaCl content (which allows for similar dilutions ratios).
The gel texture (firmness, brittleness, recovery) was analyzed using the method indicated in the description (texture analyzer). The increase in viscosity upon cooling was also analyzed according to the method in the description and compared. The results are summarized in Table 8b.

Table 8b

| | | Example 8a (=Ex 6c) (This invention) | Comparative example 8b (X-LBG) |
|---|---|---|---|
| Salt | (% aqueous phase) | 23% | 25% |
| $(Na^+/(Na^+ + K^+))*100$ | (in%) | 65% | 100% |
| Firmness (TA) | (g) | $91 \pm 4$ | $81 \pm 12$ |
| Brittleness (TA) | (mm) | $5.5 \pm 0.2$ (brittle gel, clear breaking point) | $10.0 \pm 0.0$ (elastic gel, no breaking point) |
| Recovery (TA) | (%) | $41 \pm 1$ | $99 \pm 0$ |
| Dispersion | % wt gel remaining after 30 s | $9.8 \pm 0.5$ | $24.0 \pm 2.1$ |
| Increase in viscosity upon cooling (At 10 x dilution) | Apparent viscosity in mPa.s 60 °C | $0.7 \pm 0.0$ | $2.8 \pm 0.3$ |
| | 40 °C | $1.0 \pm 0.0$ | $8.3 \pm 1.2$ |
| | 20 °C | $1.6 \pm 0.0$ | $10.5 \pm 1.7$ |

Result:

The gel according to Example 8a had an easy production process. The gel of Example 8a dispersed twice as fast as the gel of comparative example 8b. It was easier to spoon out of the packaging. After diluting in hot water and subsequent cooling down, the product of the invention showed a negligible increase in viscosity upon cooling, which was significantly less than the product of comparative example 8b.

**Claims**

1. A concentrate food composition in the form of a gel, comprising

   • Water,
   • sodium salt (Na salt) and Potassium salt (K salt) preferably in a total amount of from 5 wt% to 40 wt%, based on the total water content of the food composition, wherein the amount of Na salt and K salt is to be calculated as ((weight of Na salt + weight of K salt)/(weight of Na salt + weight of K salt + weight of total water content))*100 in %,
   • Gelling pectin, being all pectin with a degree of esterification below 55%, and wherein gelling pectin is dissolved in the water,
   • Calcium salt,

   wherein the ratio of ($Na^+$ cations/($Na^+$ cations + $K^+$ cations))*100 (in %) is from 15 wt% to 95 wt%.

2. Concentrate food composition according to any one of the preceding claims wherein the total amount of $Na^+$ cations and $K^+$ cations taken together is of between 2.5 wt% and 15 wt% based on the total water content of the food composition, wherein the total amount of $Na^+$ cations and $K^+$ cations taken together is to be calculated as ((total weight of $Na^+$ cations and $K^+$ cations taken together) / (total weight of $Na^+$ cations and $K^+$ cations taken together + weight of total water content))*100 in %.

3. Concentrate food composition according to any one of the preceding claims, wherein the composition comprises $K^+$ cations in an amount of from 0.3 wt% to 13 wt%, preferably from 0.4 wt% to 10 wt%, more preferably from 0.5 wt% to 9 wt%, most preferably from 0.8 wt% to 8 wt% based on the total water content of the food composition, calculated as ((total weight of $K^+$ cations) / (total weight of $K^+$ cations + weight of total water content))*100 in %.

4. Concentrate food composition according to any one of the preceding claims, wherein the gelling pectin, dissolved in the water of the concentrate food composition, is present in a total amount of from 0.7 wt% to 10 wt%, preferably of between 0.9 wt% and 6 wt%, more preferably between 1.0 wt% and 5 wt%, even more preferably between 1.1 wt% and 4 wt%, most preferably between 1.2 wt% and 3 wt% based on the total water content of the food composition and calculated as ((weight of galacturonic acid)/(weight of galacturonic acid + weight of total water content))*100 in %.

5. Concentrate food composition according to any one of the preceding claims, wherein $Ca^{2+}$ cations are present in an amount of from 0.01 wt% to 3 wt% based on the total water content, wherein the amount of $Ca^{2+}$ cations is to be calculated as ((weight of $Ca^{2+}$ cations) / (weight of $Ca^{2+}$ cations + weight of total water content))*100 in %.

6. Concentrate food composition according to any one of the preceding claims, wherein $Ca^{2+}$ cations are present in an amount of between 10 mg and 2000 mg, preferably from 15 to 1000 mg, more preferably from 20 to 800 mg, most preferably from between 30 to 400 mg per gram of gelling pectin.

7. Concentrate food composition according to any one of the preceding claims comprising from 4 wt% to 35 wt% of NaCl based on the total water content of the food composition.

8. Concentrate food composition according to any one of the preceding claims comprising

    a. 40 to 85 wt% of water;
    b. 4 to 35 wt% of NaCl based on the total water content of the composition;
    c. 0.7 to 10 wt% of the gelling pectin, dissolved in the water of the concentrate food compositionbased on the total water content and calculated as ((weight of galacturonic acid)/(weight of galacturonic acid + weight of total water content))*100 in %;
    d. Calcium salt, whereby $Ca^{2+}$ cations are present in an amount of from 0.01 wt% to 3 wt% based on the total water content of the food composition, wherein the amount of $Ca^{2+}$ cations is to be calculated as ((weight of $Ca^{2+}$ cations)/(weight of $Ca^{2+}$ cations + weight of total water content))*100 in %;

wherein the ratio of ($Na^+$ cations/ ($Na^+$ cations + $K^+$ cations))*100 (in %) is from 15 wt% to 95 wt%.

9. Concentrate food composition according to any one of the preceding claims, wherein the food composition further comprises a savoury taste enhancer selected from the group consisting of monosodium glutamate (MSG), 5'-ribonucleotides, organic acid and mixtures thereof.

10. Concentrate food composition according to any one of the preceding claims, wherein the ratio of the elastic modulus G' to the viscous modulus G" is higher than 1.

11. Concentrate food composition according to any one of the preceding claims, wherein the food composition has a Firmness higher than 10 g, preferably higher than 30g.

12. Concentrate food composition according to any one of the preceding claims wherein 25 grams of the composition dissolves in 0.5 L or disperses in 1 L of water of 95 °C within 3 minutes.

13. Process to provide a concentrate food composition in the form of a gel according to any one of the preceding claims, comprising the steps of:

    a. Providing a mixture comprising:

        • Water
        • Gelling pectin, being pectin with a DE below 55%, and wherein gelling pectin is dissolvable in water,

    b. Heating the mixture resulting from step a)
    c. adding Na salt and K salt, preferably in a total amount of from 5 wt% to 40 wt% (based on the total water content of the resulting food composition), wherein the amount of Na salt and K salt is to be calculated as ((weight of Na salt + K salt)/(weight of Na salt + K salt + weight of total water content)) *100 in %,
    d. Addition of calcium salt,
    e. Packaging,
    f. Allowing the mixture to solidify,
    to result in a concentrate food composition in the form of a gel wherein the ratio of (Na+ cations/(Na+ cations + K+ cations))*100 (in %) is from 15 wt% to 95 wt%.

14. Process according to claim 13, wherein the composition comprises K+ cations in an amount of from 0.3 wt% to 13 wt%, preferably from 0.4 wt% to 10 wt%, more preferably from 0.5 wt% to 9 wt%, most preferably from 0.8 wt% to 8 wt% based on the total water content of the food composition, calculated as ((total weight of K+ cations) / (total weight of K+ cations + weight of total water content))*100 in %.

15. Use of the concentrate food composition according to any one of claims 1 to 12 to prepare a bouillon, a soup, a sauce, a gravy or a seasoned dish.


**Patentansprüche**

1. Konzentrat einer Lebensmittelzusammensetzung in Form eines Gels, umfassend:

   • Wasser,
   • Natriumsalz (Na-Salz) und Kaliumsalz (K-Salz), vorzugsweise in einer Gesamtmenge von 5 Gew.-% bis 40 Gew.-%, bezogen auf den Gesamtwassergehalt der Lebensmittelzusammensetzung, wobei die Menge des Na-Salzes und des K-Salzes zu berechnen ist als ((Gewicht des Na-Salzes + Gewicht des K-Salzes)/(Gewicht des Na-Salzes + Gewicht des K-Salzes + Gewicht des Gesamtwassergehalts))*100 in %,
   • gelierendes Pektin, wobei sämtliches Pektin mit einem Veresterungsgrad unter 55% vorliegt und wobei das gelierende Pektin in dem Wasser gelöst ist,
   • Calcium-Salz,

   wobei das Verhältnis von ($Na^+$-Kationen/($Na^+$-Kationen + $K^+$-Kationen))*100 (in %) von 15 Gew.-% bis 95 Gew.-% beträgt.

2. Konzentrat einer Lebensmittelzusammensetzung nach irgendeinem der vorhergehenden Ansprüche, wobei die Gesamtmenge der $Na^+$-Kationen und $K^+$-Kationen, zusammengenommen, zwischen 2,5 Gew.-% und 15 Gew.-%, bezogen auf den Gesamtwassergehalt der Lebensmittelzusammensetzung, beträgt, wobei die Gesamtmenge der $Na^+$-Kationen und $K^+$-Kationen, zusammengenommen, zu berechnen ist als ((Gesamtgewicht der $Na^+$-Kationen und $K^+$-Kationen, zusammengenommen)/(Gesamtgewicht der $Na^+$-Kationen + $K^+$-Kationen, zusammengenommen, + Gewicht des Gesamtwassergehalts))*100 in % ist.

3. Konzentrat einer Lebensmittelzusammensetzung nach irgendeinem der vorhergehenden Ansprüche, wobei die Zusammensetzung $K^+$-Kationen in einer Menge von 0,3 Gew.-% bis 13 Gew.-%, vorzugsweise von 0,4 Gew.-% bis 10 Gew.-%, bevorzugter von 0,5 Gew.-% bis 9 Gew.-%, höchst bevorzugt von 0,8 Gew.-% bis 8 Gew.-%, bezogen auf den Gesamtwassergehalt der Lebensmittelzusammensetzung, berechnet als ((Gesamtgewicht der $K^+$-Kationen)/(Gesamtgewicht der $K^+$-Kationen + Gewicht des Gesamtwassergehalts)) *100 in %, umfasst.

4. Konzentrat einer Lebensmittelzusammensetzung nach irgendeinem der vorhergehenden Ansprüche, wobei das gelierende Pektin, das in dem Wasser des Konzentrats der Lebensmittelzusammensetzung gelöst ist, in einer Gesamtmenge von 0,7 Gew.-% bis 10 Gew.-%, vorzugsweise zwischen 0,9 Gew.-% und 6 Gew.-%, bevorzugter zwischen 1,0 Gew.-% und 5 Gew.-%, sogar bevorzugter zwischen 1,1 Gew.-% und 4 Gew.-%, höchst bevorzugt zwischen 1,2 Gew.-% und 3 Gew.-%, bezogen auf den Gesamtwassergehalt der Lebensmittelzusammensetzung und berechnet als ((Gewicht der Galacturonsäure)/(Gewicht der Galacturonsäure + Gewicht des Gesamtwassergehalts))*100 in %, vorliegt.

5. Konzentrat einer Lebensmittelzusammensetzung nach irgendeinem der vorhergehenden Ansprüche, wobei $Ca^{2+}$-Kationen in einer Menge von 0,01 Gew.-% bis 3 Gew.-%, bezogen auf den Gesamtwassergehalt, vorliegen, wobei die Menge der $Ca^{2+}$-Kationen zu berechnen ist als ((Gewicht der $Ca^{2+}$-Kationen)/(Gewicht der $Ca^{2+}$-Kationen + Gewicht des Gesamtwassergehalts)) *100 in %.

6. Konzentrat einer Lebensmittelzusammensetzung nach irgendeinem der vorhergehenden Ansprüche, wobei die $Ca^{2+}$-Kationen in einer Menge zwischen 10 mg und 2000 mg, vorzugsweise von 15 bis 1000 mg, bevorzugter von 20 bis 800 mg, höchst bevorzugt zwischen 30 und 400 mg pro Gramm des gelierenden Pektins vorliegen.

7. Konzentrat einer Lebensmittelzusammensetzung nach irgendeinem der vorhergehenden Ansprüche, umfassend von 4 Gew.-% bis 35 Gew.-% NaCl, bezogen auf den Gesamtwassergehalt der Lebensmittelzusammensetzung.

8. Konzentrat einer Lebensmittelzusammensetzung nach irgendeinem der vorhergehenden Ansprüche, umfassend:

a. 40 bis 85 Gew.-% Wasser;

b. 4 bis 35 Gew.-% NaCl, bezogen auf den Gesamtwassergehalt der Zusammensetzung;

c. 0,7 bis 10 Gew.-% des gelierenden Pektins, gelöst in dem Wasser des Konzentrats der Lebensmittelzusammensetzung, bezogen auf den Gesamtwassergehalt und berechnet als ((Gewicht der Galacturonsäure)/(Gewicht der Galacturonsäure + Gewicht des Gesamtwassergehalts))*100 in %;

d. Calciumsalz, wobei die $Ca^{2+}$-Kationen in einer Menge von 0,01 Gew.-% bis 3 Gew.-%, bezogen auf den Gesamtwassergehalt der Lebensmittelzusammensetzung, vorliegen, wobei die Menge der $Ca^{2+}$-Kationen zu berechnen ist als ((Gewicht der $Ca^{2+}$-Kationen)/(Gewicht der $Ca^{2+}$-Kationen + Gewicht des Gesamtwassergehalts))*100 in %;

wobei das Verhältnis von ($Na^+$-Kationen/($Na^+$-Kationen + $K^+$-Kationen))*100 (in %) von 15 Gew.-% bis 95 Gew.-% beträgt.

**9.** Konzentrat einer Lebensmittelzusammensetzung nach irgendeinem der vorhergehenden Ansprüche, wobei die Lebensmittelzusammensetzung ferner einen pikanten Geschmacksverbesserer umfasst, ausgewählt aus der Gruppe, die aus Mononatriumglutamat (MSG), 5'-Ribonucleotiden, organischer Säure und Mischungen davon besteht.

**10.** Konzentrat einer Lebensmittelzusammensetzung nach irgendeinem der vorhergehenden Ansprüche, wobei das Verhältnis des Elastizitätsmoduls G' zu dem Viskositätsmodul G'' größer als 1 ist.

**11.** Konzentrat einer Lebensmittelzusammensetzung nach irgendeinem der vorhergehenden Ansprüche, wobei die Lebensmittelzusammensetzung eine Festigkeit von höher als 10 g, vorzugsweise von höher als 30 g, aufweist.

**12.** Konzentrat einer Lebensmittelzusammensetzung nach irgendeinem der vorhergehenden Ansprüche, wobei sich 25 Gramm der Zusammensetzung in 0,5 l lösen oder bei 95°C innerhalb von 3 Minuten in 1 l Wasser dispergieren.

**13.** Verfahren zur Bereitstellung eines Konzentrats einer Lebensmittelzusammensetzung in Form eines Gels nach irgendeinem der vorhergehenden Ansprüche, umfassend die Schritte:

a. Bereitstellen einer Mischung, umfassend:

• Wasser
• gelierendes Pektin, wobei das Pektin mit einem Veresterungsgrad unter 55% vorliegt und wobei das gelierende Pektin in Wasser auflösbar ist,

b. Erhitzen der Mischung, resultierend aus Schritt a),

c. Zugeben von Na-Salz und K-Salz, vorzugsweise in einer Gesamtmenge von 5 Gew.-% bis 40 Gew.-% (bezogen auf den Gesamtwassergehalt der resultierenden Lebensmittelzusammensetzung), wobei die Menge des Na-Salzes und des K-Salzes zu berechnen ist als ((Gewicht des Na-Salzes + K-Salzes)/(Gewicht des Na-Salzes + K-Salzes + Gewicht des Gesamtwassergehalts))*100 in %,

d. Zugeben des Calcium-Salzes,

e. Verpacken,

f. Verfestigenlassen der Mischung, um zu einem Konzentrat einer Lebensmittelzusammensetzung in Form eines Gels zu führen, wobei das Verhältnis von ($Na^+$-Kationen/($Na^+$-Kationen + $K^+$-Kationen))*100 (in %) von 15 Gew.-% bis 95 Gew.-% beträgt.

**14.** Verfahren nach Anspruch 13, wobei die Zusammensetzung $K^+$-Kationen in einer Menge von 0,3 Gew.-% bis 13 Gew.-%, vorzugsweise von 0,4 Gew.-% bis 10 Gew.-%, bevorzugter von 0,5 Gew.-% bis 9 Gew.-%, höchst bevorzugt von 0,8 Gew.-% bis 8 Gew.-%, bezogen auf den Gesamtwassergehalt der Lebensmittelzusammensetzung, berechnet als ((Gesamtgewicht der $K^+$-Kationen)/(Gesamtgewicht der $K^+$-Kationen + Gewicht des Gesamtwassergehalts))*100 in %, umfasst.

**15.** Verwendung des Konzentrats der Lebensmittelzusammensetzung nach irgendeinem der Ansprüche 1 bis 12 zur Herstellung einer Bouillon, einer Suppe, einer Soße, einer Bratensoße oder eines gewürzten Gerichts.

**Revendications**

1. Composition alimentaire concentrée dans la forme d'un gel, comprenant

   • de l'eau,
   • un sel de sodium (sel de Na) et un sel de potassium (sel de K), de préférence dans une quantité totale de 5 % en masse à 40 % en masse, sur la base de la teneur totale en eau de la composition alimentaire, dans laquelle la quantité de sel de Na et de sel de K doit être calculée comme ((masse de sel de Na + masse de sel de K)/(masse de sel de Na + masse de sel de K + masse de teneur totale en eau))*100 en %,
   • de la pectine gélifiante, étant toute la pectine avec un degré d'estérification inférieur à 55 %, et dans laquelle la pectine gélifiante est dissoute dans l'eau,
   • un sel de calcium

   dans laquelle le rapport de (cations $Na^+$/(cations $Na^+$ + cation $K^+$))*100 (en %) est de 15 % en masse à 95 % en masse.

2. Composition alimentaire concentrée selon l'une quelconque des revendications précédentes, dans laquelle la quantité totale de cations $Na^+$ et cations $K^+$ pris ensemble est de 2,5 % en masse à 15 % en masse sur la base de la teneur totale en eau de la composition alimentaire, dans laquelle la quantité totale de cations $Na^+$ et cations $K^+$ pris ensemble doit être calculée comme ((masse totale de cations $Na^+$ et cations $K^+$ pris ensemble)/(masse totale de cations $Na^+$ et cations $K^+$ pris ensemble + masse de teneur totale en eau))*100 en %.

3. Composition alimentaire concentrée selon l'une quelconque des revendications précédentes, dans laquelle la composition comprend des cations $K^+$ dans une quantité de 0,3 % en masse à 13 % en masse, de préférence de 0,4 % en masse à 10 % en masse, encore mieux de 0,5 % en masse à 9 % en masse, bien mieux encore de 0,8 % en masse à 8 % en masse sur la base de la teneur totale en eau de la composition alimentaire, calculée comme ((masse totale de cations $K^+$)/(masse totale de cations $K^+$ + masse de teneur totale en eau))*100 en %.

4. Composition alimentaire concentrée selon l'une quelconque des revendications précédentes, dans laquelle la pectine gélifiante, dissoute dans l'eau de la composition alimentaire concentrée, est présente dans une quantité totale de 0,7 % en masse à 10 % en masse, de préférence de 0,9 % en masse à 6 % en masse, encore mieux de 1,0 % en masse à 5 % en masse, bien mieux encore de 1,1 % en masse à 4 % en masse, particulièrement de préférence de 1,2 % en masse à 3 % en masse sur la base de la teneur totale en eau de la composition alimentaire et calculée comme ((masse d'acide galacturonique)/(masse d'acide galacturonique + masse de teneur totale en eau)*100 en %.

5. Composition alimentaire concentrée selon l'une quelconque des revendications précédentes, dans laquelle des cations $Ca^{2+}$ sont présents dans une quantité de 0,01 % en masse à 3 % en masse sur la base de la teneur totale en eau, dans laquelle la quantité de cations $Ca^{2+}$ doit être calculée comme ((masse de cations $Ca^{2+}$)/(masse de cations $Ca^{2+}$ + masse de teneur totale en eau))*100 en %.

6. Composition alimentaire concentrée selon l'une quelconque des revendications précédentes, dans laquelle des cations $Ca^{2+}$ sont présents dans une quantité de 10 mg à 2 000 mg, de préférence de 15 à 1 000 mg, encore mieux de 20 à 800 mg, bien mieux encore de 30 à 400 mg par gramme de pectine gélifiante.

7. Composition alimentaire concentrée selon l'une quelconque des revendications précédentes comprenant de 4 % en masse à 35 % en masse de NaCl sur la base de la teneur totale en eau de la composition alimentaire.

8. Composition alimentaire concentrée selon l'une quelconque des revendications précédentes comprenant

   a. de 40 à 85 % en masse d'eau ;
   b. de 4 à 35 % en masse de NaCl sur la base de la teneur totale en eau de la composition ;
   c. de 0,7 à 10 % en masse de la pectine gélifiante, dissoute dans l'eau de la composition alimentaire concentrée sur la base de la teneur totale en eau et calculée comme ((masse d'acide galacturonique)/(masse d'acide galacturonique + masse de teneur totale en eau))*100 en % ;
   d. un sel de calcium, sur quoi des cations $Ca^{2+}$ sont présents dans une quantité de 0,01 % en masse à 3 % en masse sur la base de la teneur totale en eau de la composition alimentaire, dans laquelle la quantité de cations $Ca^{2+}$ doit être calculée comme ((masse de cations $Ca^{2+}$)/(masse de cations $Ca^{2+}$ + masse de teneur totale en eau))*100 en % ;

dans laquelle le rapport de (cations Na$^+$/(cations Na$^+$ + cations K$^+$))*100 (en %) est de 15 % en masse à 95 % en masse.

9. Composition alimentaire concentrée selon l'une quelconque des revendications précédentes, dans laquelle la composition alimentaire comprend de plus un promoteur de goût savoureux choisi dans le groupe consistant en glutamate de monosodium (MSG), 5'-ribonucléotide, acide organique et mélanges de ceux-ci.

10. Composition alimentaire concentrée selon l'une quelconque des revendications précédentes, dans laquelle le rapport du module élastique G' au module visqueux G" est supérieur à 1.

11. Composition alimentaire concentrée selon l'une quelconque des revendications précédentes, dans laquelle la composition alimentaire présente une fermeté supérieure à 10 g, de préférence supérieure à 30 g.

12. Composition alimentaire concentrée selon l'une quelconque des revendications précédentes, dans laquelle 25 grammes de la composition se dissolvent dans 0,5 l ou se dispersent dans 1 l d'eau à 95°C en 3 minutes.

13. Procédé de fourniture d'une composition alimentaire concentrée dans la forme d'un gel selon l'une quelconque des revendications précédentes, comprenant les étapes de :

    a. fourniture d'un mélange comprenant :

        • de l'eau
        • de la pectine gélifiante, étant une pectine avec un DE inférieur à 55 %, et dans laquelle la pectine gélifiante peut être dissoute dans de l'eau,

    b. chauffage du mélange résultant de l'étape a)
    c. addition de sel de Na et de sel de K, de préférence dans une quantité totale de 5 % en masse à 40 % en masse (sur la base de la teneur totale en eau de la composition alimentaire résultante), dans lequel la quantité de sel de Na et sel de K doit être calculée comme ((masse de sel de Na + sel de K)/(masse de sel de Na + sel de K + masse de teneur totale en eau))*100 en %,
    d. addition de sel de calcium,
    e. emballage,
    f. laisser le mélange solidifier,

    pour résulter en une composition alimentaire concentrée dans la forme d'un gel dans lequel le rapport de (cations Na$^+$/(cations Na$^+$ + cations K$^+$))*100 (en %) est de 15 % en masse à 95 % en masse.

14. Procédé selon la revendication 13, dans lequel la composition comprend des cations K$^+$ dans une quantité de 0,3 % en masse à 13 % en masse, de préférence de 0,4 % en masse à 10 % en masse, encore mieux de 0,5 % en masse à 9 % en masse, bien mieux encore de 0,8 % en masse à 8 % en masse rapporté à la teneur totale en eau de la composition alimentaire, calculée comme ((masse totale de cations K$^+$)/(masse totale de cations K$^+$ + masse de teneur totale en eau))*100 en %.

15. Utilisation de la composition alimentaire concentrée selon l'une quelconque des revendications 1 à 12 pour préparer un bouillon, une soupe, une sauce, un jus de viande ou un plat assaisonné.

# Fig. 1

# Fig. 2a

Texture analyser (typical examples)

This invention

This Invention:
- Firmness > 10g
- Brittleness < 8mm
- Recovery < 80%

# Fig. 2b

Purees and pastes (e.g. tomato paste, onion pastes, onion puree)

- Firmness > 10g (Firm vegetable paste/puree)
- Firmness < 10g (Weak vegetable paste/puree)
- Brittleness > 8mm
- Recovery > 80%

# Fig.2c

Elastic gels (e.g. xanthan-LBG, Xanthan carrageenan)

- Firmness > 10g (Stronger gels)
- Firmness < 10g (Very weak gels)
- Brittleness > 8mm
- Recovery > 80%

# Fig. 3

EP 2 987 415 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007068484 A
- EP 2468110 A

**Non-patent literature cited in the description**

- **THOMAS MEZGER.** Das Rheologie Handbuch. Curt R. Vincentz-Verlag, 2000
- **ENGLYST ; CUMMINGS.** *Analyst,* 1984, vol. 109 (7), 937-942
- **FILISETTI-COZZI ; CARPITA.** *Analytical Biochemistry,* 1991, vol. 197, 157-162
- FCC. National Academy of Science, 1981
- **WALTER et al.** *Journal of Food Science,* 1983, vol. 48, 1006-10070
- **HOU et al.** *Botanical Bulletin of Academia Sincia,* 1999, vol. 40, 115-119
- **LEVIGNE S. et al.** *Food Hydrocolloids,* 2002, vol. 16, 547-550
- **ROSENBOHM et al.** *Carbohydrate Research,* 2003, vol. 338, 637-649
- **WILLIAMS et al.** *Journal of Agricultural Food and Chemistry,* 2003, vol. 51, 1777-1781
- **STROM et al.** *Carbohydrate Polymers,* 20 June 2005, vol. 60 (4), 467-473